# EUROPEAN PATENT SPECIFICATION

(11) **EP 1 710 007 B1**
(45) Date of publication and mention of the grant of the patent: **21.05.2008**
(21) Application number: 06111650.5
(22) Date of filing: 23.03.2006
(51) Int. Cl.: B01D 29/01, B01D 35/027, B29C 65/16

(54) **Filter and manufacturing method therefor**
Filter und dessen Herstellungsmethode
Filtre et son procédé de fabrication

(30) Priority: 29.03.2005 JP 2005096259; 25.11.2005 JP 2005341083
(43) Date of publication of application: 11.10.2006
(73) Proprietor: Toyota Boshoku Kabushiki Kaisya, Kariya-shi, Aichi-ken, 448-8651 (JP)
(72) Inventor: Kuno, Tetsuya, Kariya-shi Aichi 448-8651 (JP)
(74) Representative: TBK-Patent

(56) References cited:
- EP-A- 1 438 998
- WO-A-00/13763
- DE-A1- 10 058 251
- DE-A1- 10 206 261
- DE-A1- 10 256 565

## Description

### BACKGROUND OF THE INVENTION

### 1. Field of the Invention

The present invention relates to a filter according to the preamble of claim 1 and a manufacturing method therefor. More specifically, the present invention relates to a filter capable of suppressing dislodging of a filter element during filter use, in addition to being capable of suppressing abnormalities such as welding burrs or the like inside the filter chamber, and a manufacturing method therefor.

### 2. Description of the Related Art

DE 102 56 565 A1 discloses a generic filter. The filter comprises a first case member and a second case member that are mutually joined to form a filter chamber, and a filter element that is held between respective joining ends of the first case member and the second case member. The second case member has laser absorbency. A weld is formed by laser light at a contact area between the filter element and the joining end of the second case member to connect the filter element and the second case member.

Further, an oil filter for an automatic transmission is known in which a first case member and a second case member are mutually joined to form a filter chamber, and a filter element is held between joining ends thereof (see hereafter Patent Documents 1 and 2 for examples).

Patent Document 1 discloses that a filter material 3 is fastened by compression using inner side rim projections 1d and 2d of an upper case 1 and a lower case 2. However, since the filter material is only fastened by compression in Patent Document 1, the possibility remains that the filter material may become loose upon application of a high internal pressure during use of the oil filter.

Furthermore, Patent Document 2 discloses that a spike 56 that pierces a rim of a filter medium 20 is provided on a lower cover member 16. However, the filter medium pierced by the spike as in Patent Document 2 may tear and result in a filter defect.

In light of this, related art to solve the above problems has been proposed that laser welds a case member and a filter element together (see hereafter Patent Document 3 for an example).

Patent Document 3 discloses that a laser-permeable filter 4 is mounted on a bottom surface of a case 2 with laser absorbency. Pressure is applied to the filter 4 in the up-down direction by a jig 19 to increase the fiber density of a welding region B2. Laser light is radiated via a slit 19a of the jig 19 from a direction identical to a pressing direction (up-down direction) facing the upper surface of a rim of the filter 4 so as to weld the case 2 and the filter 4 together (see FIGS. 6, 7 and the like in Patent Document 3).

However, the laser light is radiated from the direction in which pressure is applied to the filter element so as to form the welding region B2 inside the filter chamber of the case. Consequently, laser light output or the like generates abnormalities such as welding burrs in the slit of the jig and in the clearance between the case inner wall and the rim of the filter element. There is a possibility that the abnormalities may remain inside the filter chamber and affect the product performance of the filter. The welding region can be disposed at a position sufficiently separate from the clearance in order to suppress abnormalities such as welding burrs at the clearance between the case inner wall and the rim of the filter element. However, this increases the dimensions of the outer side of the welding region in the case and enlarges the size of the filter overall.

In Patent Document 3, radiating laser light through the slit of the press jig also makes it difficult to secure a sufficient weld width required by the welding region. To secure the sufficient weld width required, the slit width of the press jig can be set larger. However, this weakens the force of pressure applied to the filter element by the press jig and reduces fiber density at the welding region, making it difficult to achieve a reliable weld.

Additionally, laser light must permeate the filter element according to Patent Document 3, which thus mandates the use of a laser-permeable filter element.

In Patent Document 3, the edge of the filter element is exposed to inside the filter chamber. Consequently, product performance may be affected by problems such as fiber from the edge of the filter element. Minute adjustments must therefore be made, such as permeating the entire thickness of the filter element with melted laser absorbent material and hardening it. Also, a function for adjusting the laser radiation heat becomes necessary which considers variations in transmittance and the like.

Furthermore, a corrugated filter element is adopted for increasing the filter surface, and the corrugated portion assumes a complicated three-dimensional shape. In Patent Document 3, laser light cannot be radiated orthogonal to the melted member (case member) on the absorption side, because the laser light is radiated from the direction in which pressure is applied to the filter element. Since it is also difficult to align the focal distance of the laser light to the weld along the corrugated portion, some parts may be under- or over-welded (become carbonated material).
Patent Document 1: Unexamined Utility Model Application Publication No. 59-116606
Patent Document 2: JP-A-11-156118
Patent Document 3: JP-A-2003-311838

### SUMMARY OF THE INVENTION

In light of the circumstances described above, it is an object of the present invention to further develop a filter according to the preamble of claim 1 such that it is capable of suppressing dislodging of a filter element during filter use, in addition to being capable of suppressing abnormalities such as welding burrs or the like inside a filter chamber, and to provide a manufacturing method therefor.

This object is solved by a filter having the features of claim 1. A manufacturing method for such a filter is defined in claim 16.

Further advantageous developments are defined in the dependent claims.

The present invention has the following structure:
1. A filter comprising:
   a first case member and a second case member that are mutually joined to form a filter chamber; and
   a filter element that is held between respective joining ends of said first case member and said second case member, wherein
   said first case member has laser permeability,
   said second case member has laser absorbency, and
   an element weld is formed by laser light at a contact area between said filter element and said joining end of said second case member.
2. The filter according to 1 above, wherein said element weld is provided on an outer surface side of the contact area between said filter element and said joining end of said second case member.
3. The filter according to 1 or 2 above, wherein said first case member has an outer wall that extends along a joining direction and is in contact with said joining end of said second case member.
4. The filter according to 3 above, wherein a case weld is formed by laser light at a contact area between said outer wall and said joining end of said second case member.
5. The filter according to 4 above, wherein said outer wall faces an outer surface side of a tip of said joining end on said second case member from a predetermined distance.
6. The filter according to 4 above, wherein the outer wall is in contact with said outer side surface of said tip of said joining end on said second case member.
7. The filter according to 3 above, wherein said outer wall is in contact with said outer side surface of said tip of said joining end on said second case member, and said element weld is formed extending up to said outer wall.
8. The filter according to any one of 3 to 7 above, wherein said outer wall is in contact with said joining end of said second case member at a contact surface that extends along the joining direction.
9. The filter according to any one of 3 to 8 above, wherein said first case member has an engaging portion, and said second case member has an engaged portion that engages with said engaging portion in the joining direction.
10. The filter according to 9 above, wherein said engaging portion and said engaged portion are provided on at least one of a filter chamber side and a side opposite the filter chamber side of a weld formed at said contact area between said outer wall and said joining end of said second case member.
11. The filter according to any one of 1 to 10 above, wherein comb-teeth-shaped portions for supporting said filter element with a corrugated shape are provided on said respective joining ends of said first case member and said second case member.
12. The filter according to any one of 1 to 11 above, wherein
   a notch is provided on a surface side of at least one of said first case member and said second case member, which is in contact with an outer end of said filter element,
   a portion of said outer end of said filter element is disposed within a space of said notch, and
   at least a portion of said outer end of said filter element structures said element weld.
13. The filter according to 12 above, wherein a joining-direction thickness of said element weld is greater than a joining-direction thickness of a supported portion of said filter element supported between said first case member and said second case member.
14. The filter according to 12 or 13 above, wherein said notch is provided on a tip outer corner side of said joining end of said second case member.
15. The filter according to 14 above, wherein an outer side surface of said joining end of said second case member and an outer side surface of said outer end of said filter element are substantially on the same plane.
16. The filter according to any one of 12 to 15 above, wherein said filter element has laser absorbency.
17. A manufacturing method for the filter according to any one of 1 to 16 above, comprising:
   mutually joining a first case member and a second case member to form a filter chamber with a rim of a filter element in contact with the joining end of said second case member, which has laser absorbency, so as to hold said filter element between said joining ends of said first case member and said second case member; and
   laterally radiating laser light toward at least one of said joining end of said second case member and an outer end of said filter element with said filter element in a held state.
18. The manufacturing method for a filter according to 17 above, wherein holding of said filter element involves holding said filter element between said joining ends of said first case member and said second case member with a portion of said outer end of said filter element disposed within a space of a notch provided on at least one of said first case member and said second case member.

According to the filter of the present invention, an element weld is formed by laser light on a contact area between the filter element and a joining end of a second case member. The second case member and the filter element are solidly welded by the element weld. Accordingly, dislodging of the filter element from between the first and second case members can be suppressed even if excessive internal pressure occurs inside the filter chamber during filter use. In addition, the element weld is sufficiently disposed away from the filter chamber. Consequently, any abnormalities such as welding burrs or the like that may occur near the element weld due to laser light output or the like can be restricted from passing between the contact surfaces of the second case member and the filter element and penetrating to inside the filter chamber.

If said element weld is provided on an outer surface side of the contact area between said filter element and said joining end of said second case member, then the second case member and the filter element are more solidly welded by the element weld.

In cases where the first case member has an outer wall, the outer wall may be used to cover at least the outer side surface of the filter element, thereby improving the appearance.

Additionally, if a case weld is formed by laser light at a contact area between the outer wall and the joining end of the second case member, then the second case member and the filter element are welded by the element weld, and the first and second case members are welded by the case weld. Consequently, the three members consisting of the first case member, the second case member and the filter element can be solidly integrated.

If the outer wall faces the outer side surface of the tip of the joining end on the second case member from a predetermined distance, any welding burrs that may occur on the element weld can be easily guided to a space of a predetermined distance between the second case member and the outer wall. This in turn can more reliably suppress the penetration of the welding burrs to inside the filter chamber.

If the outer wall contacts the outer side surface of the tip of the joining end on the second case member, the outer wall cools a surface heated portion of a melted portion created during formation of the element weld. Compared to cases where there is no contact of the outer wall, a greater weld depth (a length in a direction orthogonal to the joining direction) of the element weld can be achieved for an increase in the bond strength of the second case member and the filter element. In addition, the element weld is formed extending up to the outer wall, therefore, the first and second case members are more solidly welded by the element weld and the case weld.

The outer wall may be in contact with the outer side surface of the tip of the joining end on the second case member, with no weld other than the element weld formed. In such cases, the element weld is formed extending up to the outer wall side. Accordingly, in addition to welding the second case member and the filter element, the element weld also welds the first and second case members. A one-time application of laser irradiation can thus achieve the integration of three members, thereby shortening the laser irradiation period. Furthermore, since only one weld is provided, a simpler and more compact structure can be achieved.

The outer wall may contact the joining end of the second case member at a contact surface extending along the joining direction. Thus when the first and second case members are pressed in the joining direction, there is no change in the distance between the contact surfaces in the joining direction of the outer wall and the second case member, regardless of any relative shifts in distance along the joining direction of the first and second case members due to the degree of pressure applied or the like. Consequently, a more reliable weld of the first and second case members can be achieved.

In cases where the first case member has an engaging portion and the second case member has an engaged portion that is engaged with the engaging portion in the joining direction, curling of the outer wall such as that caused by thermal expansion of a melted portion thereof during formation of the case weld can thus be suppressed through the engagement of the engaging portion and the engaged portion. In addition, an initial clearance in a direction orthogonal to the joining direction between the outer wall and the joining end of the second case member may be controlled to a predetermined value or less.

If the engaging portion and the engaged portion are provided on the filter chamber side of a weld formed at a contact area, then welding burrs that may occur near the weld can be restricted from penetrating to inside the filter chamber. Alternatively, if the engaging portion and the engaged portion are provided on a side opposite the filter chamber side of a weld formed at a contact area, then welding burrs that may occur near the weld can be restricted from reaching outside. If the engaging portion and the engaged portion are provided on both the filter chamber side and the side opposite the filter chamber side of a weld formed at a contact area, then bending of the first case member can be more reliably suppressed, in addition to more reliably controlling the initial clearance.

In cases where comb-teeth-shaped portions are provided on the respective joining ends of the first and second case members so as to hold the filter element with a corrugated shape, the corrugated filter element can be directly laser welded to the second case member.

The portion of the outer end of the filter element may be disposed within a space of a notch provided on one of the case members, and at least that portion structures the element weld by laser light. Thus even if excessive internal pressure occurs inside the filter chamber during filter use, the outer end of the filter element structuring the element weld catches on a corner of the case member so as to suppress dislodging of the filter element from between the first and second case members. In addition, the element weld is sufficiently disposed away from the filter chamber. Consequently, any abnormalities such as welding burrs or the like that may occur near the element weld can be restricted from passing between the contact surfaces of the second case member and the filter element and penetrating to inside the filter chamber.

In cases where the element weld is provided on the outer surface side of the contact area between the filter element and the joining end of the second case member, the second case member and the filter element are solidly welded by the element weld to more reliably suppress dislodging of the filter element.

If a joining-direction thickness of the element weld is greater than a joining-direction thickness of a supported portion of the filter element, then the outer end of the filter element more reliably catches on the corner of the case member so as to more reliably suppress dislodging of the filter element.

If the notch is provided on the outer side surface of the tip of the joining end on the second case member, then the element weld can be disposed at a more separated position from the filter chamber so as to more reliably suppress the penetration of abnormalities to inside the filter chamber. In addition, a portion of the outer end of the filter element can be more reliably disposed within the space of the notch.

The outer side surface of the joining end of the second case member and the outer side surface of the outer end of the filter element may be substantially on the same plane. In such cases, the dimensions of the outer end of the filter element can be suppressed to the minimum required. In cases where the tip outer corner side of the joining end of the second case member is melted by laser light, the melted portion can more easily penetrate the outer end of the filter element to form an element weld that is capable of further increasing the weld strength (dislodging strength) of the filter element.

If the filter element has laser absorbency, then melting of the outer end of the filter element by laser light can form an element weld that is capable of further increasing the weld strength of the filter element.

In cases where the first case member has an outer wall and a case weld is formed by laser light at a contact area between the outer wall and the joining end of the second case member, the second case member and the filter element are welded by the element weld, and the first and second case members are welded by the case weld. Consequently, the three members consisting of the first case member, the second case member and the filter element can be solidly integrated.

If the laser light is radiated toward joining end of the second case member and/or the outer end of the filter element, then the element weld and/or the case weld can be more easily formed.

According to a manufacturing method for a filter of the present invention, laser light is laterally radiated toward the joining end of the second case member and/or the outer end of the filter element, with the joining end of the second case member and the rim of the filter element in contact with each other. Consequently, the element weld is formed by laser light on the contact area between the filter element and the joining end of the second case member. The second case member and the filter element are solidly welded by the element weld. Accordingly, dislodging of the filter element from between the first and second case members can be suppressed even if excessive internal pressure occurs inside the filter chamber during filter use. In addition, the element weld is sufficiently disposed away from the filter chamber. Consequently, any abnormalities such as welding burrs or the like that may occur near the element weld due to laser light output or the like can be restricted from passing between the contact surfaces of the second case member and the filter element and penetrating to inside the filter chamber.

If the filter element is held between the joining ends of the first and second case members, with a portion of the outer end of the filter element disposed within a space of a notch provided on one of the case members, then the element weld is structured by at least a portion of the outer end of the filter element. Thus even if excessive internal pressure occurs inside the filter chamber during filter use, the outer end of the filter element structuring the element weld catches on a corner of the case member so as to suppress dislodging of the filter element from between the first and second case members. In addition, the element weld is sufficiently disposed away from the filter chamber. Consequently, any abnormalities such as welding burrs or the like that may occur near the element weld can be restricted from passing between the contact surfaces of the second case member and the filter element and penetrating to inside the filter chamber.

### BRIEF DESCRIPTION OF THE DRAWINGS

FIG. 1 is a perspective view of an entire filter according to the present working examples;
FIG. 2 is a cross-sectional view of a main portion illustrating a condition during laser irradiation of the filter according to a first working example;
FIG. 3 is a cross-sectional view of the main portion illustrating a condition after laser irradiation of a filter according to the first working example;
FIG. 4 is a cross-sectional view of the main portion illustrating a condition during laser irradiation of the filter according to a second working example;
FIG. 5 is a cross-sectional view of the main portion illustrating a condition after laser irradiation of the filter according to the second working example;
FIG. 6 is a cross-sectional view of the main portion illustrating a condition during laser irradiation of the filter according to a third working example;
FIG. 7 is an expanded view of the main portion in FIG. 6;
FIG. 8 is a cross-sectional view of the main portion illustrating a condition during laser irradiation of the filter according to a fourth working example;
FIG. 9 is an expanded view of the main portion in FIG. 8;
FIG. 10 is a cross-sectional view of the main portion illustrating a condition during laser irradiation of the filter according to a fifth working example;
FIG. 11 is an expanded view of the main portion in FIG. 10;
FIG. 12 is a cross-sectional view of the main portion illustrating a condition during laser irradiation of the filter according to a sixth working example;
FIG. 13 is a cross-sectional view of the main portion illustrating a condition after laser irradiation of the filter according to the sixth working example;
FIG. 14 is a cross-sectional view of the main portion illustrating a condition during laser irradiation of the filter according to a seventh working example;
FIG. 15 is a cross-sectional view of the main portion illustrating a condition after laser irradiation of the filter according to the seventh working example;
FIG. 16 is a cross-sectional view of the main portion illustrating a condition during laser irradiation of the filter according to an eighth working example;
FIG. 17 is a cross-sectional view of the main portion illustrating a condition after laser irradiation of the filter according to the eighth working example;
FIG. 18 is a cross-sectional view of the main portion illustrating a condition during laser irradiation of another form of the filter;
FIG. 19 is a cross-sectional view of the main portion illustrating a condition after laser irradiation of the filter;
FIG. 20 is an exploded perspective view of yet another form of the filter;
FIG. 21 is a cross-sectional view of the main portion of the filter;
FIG. 22 is a perspective view of the entire filter according to the present working examples;
FIG. 23 is a cross-sectional view of the main portion of the filter;
FIG. 24 is an expanded view of the main portion in FIG. 2;
FIG. 25 is a cross-sectional view of the main portion illustrating a condition during laser irradiation of the filter;
FIG. 26 is a cross-sectional view of the main portion illustrating a condition after laser irradiation of the filter;
FIG. 27 is an expanded view of the main portion in FIG. 5;
FIG. 28 is an expanded view of the main portion illustrating another form of an element weld;
FIG. 29 is an expanded view of the main portion illustrating yet another form of the element weld;
FIG. 30 is an expanded view of the main portion illustrating still yet another form of the element weld;
FIG. 31 is an expanded view of the main portion illustrating another form of a notch;
FIG. 32 is an expanded view of the main portion illustrating yet another form of the notch;
FIG. 33 is a cross-sectional view of the main portion illustrating still yet another form of the notch;
FIG. 34 is a cross-sectional view of the main portion illustrating still yet another form of the notch;
FIG. 35 is a cross-sectional view of the main portion illustrating still yet another form of the notch;
FIG. 36 is an expanded view of the main portion illustrating another form of the filter;
FIG. 37 is an expanded view of the main portion illustrating yet another form of the filter;
FIG. 38 is an expanded view of the main portion illustrating still yet another form of the filter;
FIG. 39 is an expanded view of the main portion illustrating still yet another form of the filter;
FIG. 40 is an exploded perspective view illustrating still yet another form of the filter; and
FIG. 41 is a cross-sectional view of the main portion of the filter.

### DETAILED DESCRIPTION OF THE PREFERRED EMBODIMENTS

### Exemplary Forms of the Invention

### (First Exemplary Form)

### 1. Filter

A filter as follows in a first exemplary form below is provided with a first case member, a second case member, and a filter element to be described hereafter.

The "first case member" is not particularly limited in terms of shape, size, material or the like, provided that it is laser-permeable, and is mutually joined with the second case member described later to form a filter chamber. The first case member typically has a frame-shaped joining end. In addition, an inflow port and an outflow port for fluid, for example, can be formed on the first case member. Furthermore, conceivable shapes of the first case member include a dish shape, bowl shape, flat shape and the like.

The first case member can be formed from, for example, a synthetic resin material. The synthetic resin material may contain dye and/or pigment. From the standpoint of laser permeability, the first case member is preferably formed from a synthetic resin material containing dye. Synthetic resin material that may be used include, for example, amorphous resin such as polystyrene (PS), low-density polyethylene (LDPE), and polycarbonate (PC), and crystalline resin such as polypropylene (PP), polybutylene terephthalate (PBT), polyethylene terephthalate (PET), polyamide (PA), and polyacetal (POM). From the standpoint of laser permeability, an amorphous resin from among the examples is preferred.

The "second case member" is not particularly limited in terms of shape, size, material or the like, provided that it has laser absorbency, and is mutually joined with the first case member to form a filter chamber. The second case member typically has a frame-shaped joining end. In addition, an inflow port and an outflow port for fluid, for example, can be formed on the second case member. Furthermore, conceivable shapes of the second case member include a dish shape, bowl shape, flat shape and the like.

The second case member can be formed from, for example, a synthetic resin material. The synthetic resin material may contain dye and/or pigment. From the standpoint of enabling easily adjustment of a heated amount, the second case member is preferably formed from a synthetic resin material containing pigment and dye. Synthetic resin materials that may be used include amorphous resin such as polystyrene (PS), low-density polyethylene (LDPE), and polycarbonate (PC), and crystalline resin such as polypropylene (PP), polybutylene terephthalate (PBT), polyethylene terephthalate (PET), polyamide (PA), and polyacetal (POM). From the standpoint of laser absorbency, an amorphous resin or crystalline resin may be used.

The "filter element" (hereafter referred to simply as "element") is not particularly limited in terms of shape, size, material or the like, provided that it can be held between respective joining ends of the first case member and the second case member. Conceivable shapes of the element include a corrugated shape, sheet shape, wave shape and the like. A corrugated element can be, for example, (1) a configuration formed from an element body having a plurality of corrugated portions, or (2) a configuration formed from an element body having a plurality of corrugated portions, and a support frame that supports the element body. In addition, materials such as non-woven fabric, cloth, paper and the like can conceivably be used for the element. Note that the element may also have laser permeability or laser absorbency.

It should be noted that an outward protrusion of the outer side surface of the filter element from the outer side surface of the joining end of the second case member is possible, but not recommended in the configuration where the filter element is held between the first and second case members.

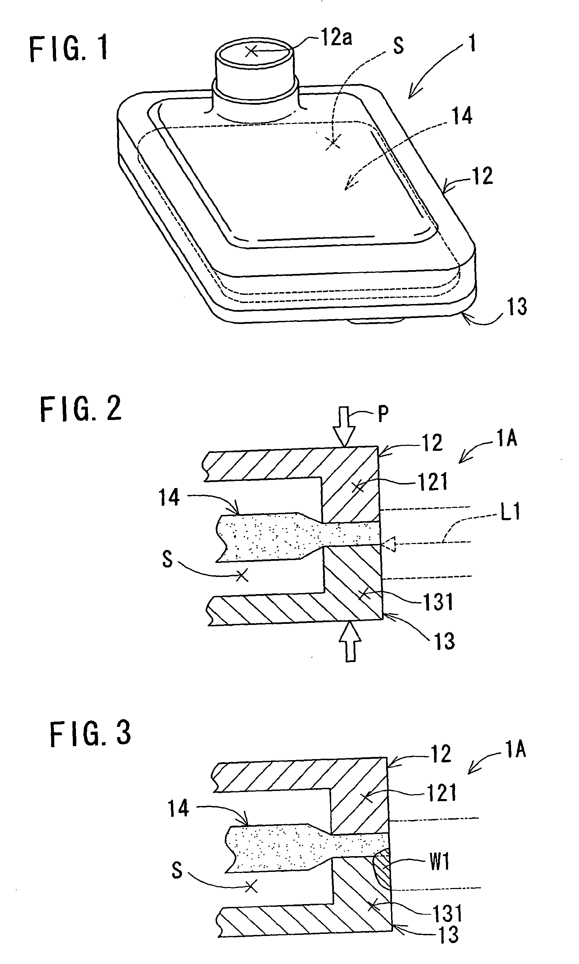

An element weld (W1) is formed by laser light on the outer surface side of a contact area between the filter element and the joining end of the second case member (see FIG. 3).

The "element weld" is not particularly limited in terms of weld width, depth, shape or the like. For example, the element weld may be formed by laterally radiating laser light toward the outer side surface of the filter element and the outer side surface of the tip of the joining end on the second case member. Such laser light irradiation can be performed while the first case member and the second case member are pressed in the joining direction.

Also note that the laser light irradiation may be performed in a continuous and uniform manner along the periphery of the filter, so as to continuously form the element weld along the filter periphery.

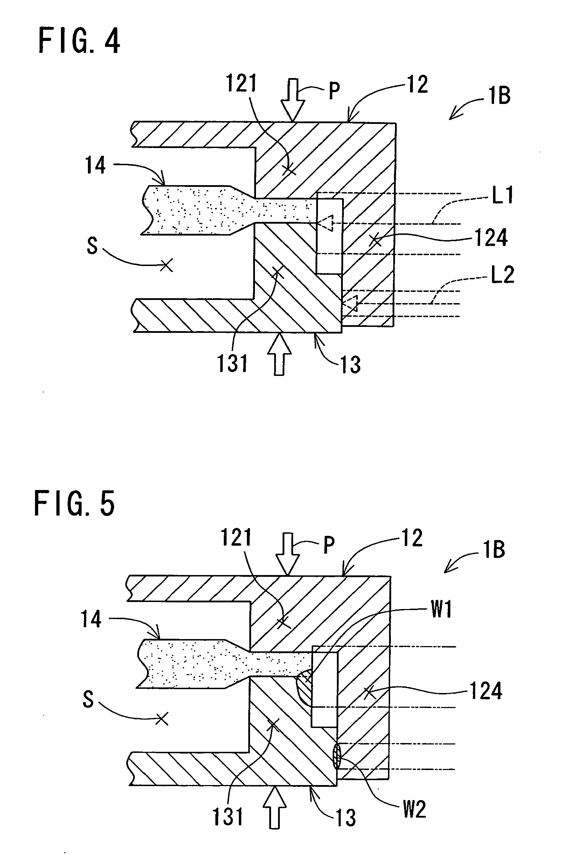

The first case member may also have an outer wall (124) that extends along the joining direction and contacts the joining end of the second case member (see FIG. 5).

The "outer wall" is not particularly limited in terms of shape, size or the like. For example, the outer wall can be provided so as to cover the outer side surface of the filter element and the outer side surface of the tip of the second case member. In addition, the outer wall may contact the joining end of the second case member at a contact surface in an arbitrary direction. However, from the standpoint of ensuring that the clearance between contact surfaces of the outer wall and the second case member due to pressure applied by the first and second case members, the outer wall may be a contact surface that extends along the joining direction and contacts the joining end of the second case member.

Note that the "contact" mentioned above also includes cases in which a minute clearance (such as a clearance of 0.2 mm or less) capable of forming the weld by laser light is left between the opposing surfaces.

An element weld (W2) can be formed by laser light at the contact area between the outer wall and the joining end of the second case member (see FIG. 5). In this case, the alignment of the case weld and the element weld is typically displaced at least in the joining direction.

The "case weld" is not particularly limited in terms of weld width, depth, shape or the like. For example, the case weld can be formed by laterally radiating laser light from the outer wall of the first case member toward the contact area between the outer wall and the joining end of the second case member. Such laser light irradiation can be performed while pressure is applied to the first case member and the second case member in the joining direction.

Also note that the laser light irradiation may be performed in a continuous and uniform manner along the periphery of the filter, so as to continuously form the case weld along the filter periphery.

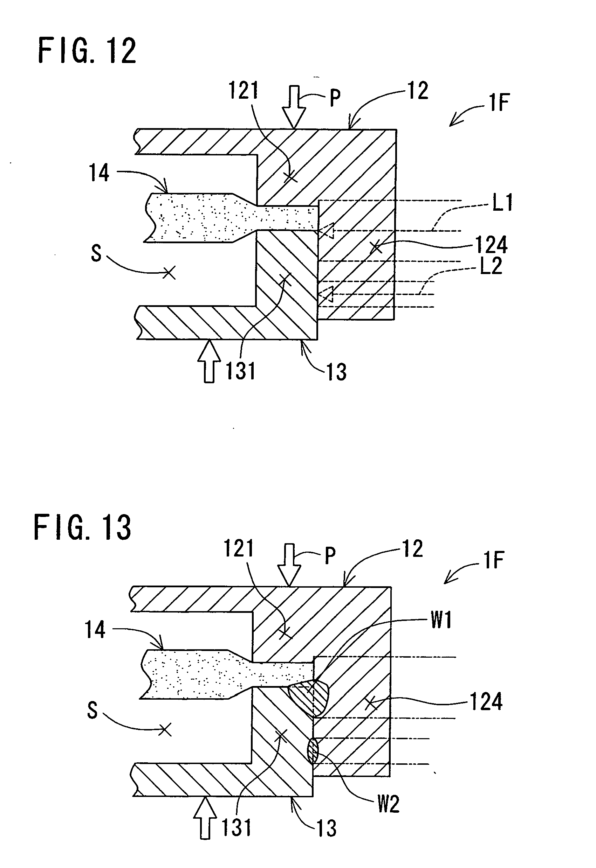

In this case, the outer wall can be, for example, (1) a configuration that faces the outer side surface of the tip of the joining end on the second case member (see FIG. 5), or (2) a configuration that contacts the outer side surface of the tip of the joining end on the second case member (see FIG. 13).

In the latter configuration above, the element weld is formed extending up to the outer wall side. Furthermore, in the latter configuration, a melted portion (heated portion) is cooled by the outer wall when forming the element weld, such that the element weld achieves a greater weld depth than that obtained in the former configuration. This in turn can increase the bond strength of the second case member and the filter element. Additionally, a second case member including low absorption material may be used in the case of the latter configuration. In doing so, the element weld can achieve a longer weld depth, and the bond strength of the second case member and the filter element can be further increased.

It should be noted that the contact distance of the contact surfaces of the outer wall and the second case member can be set, for example, to a value greater than the laser radiation width (such as one twice the laser radiation width). Thus in addition to increasing the bond strength of the first and second case members, welding burrs can also be suppressed. This is because the weld width of the case weld is greater than the laser radiation width.

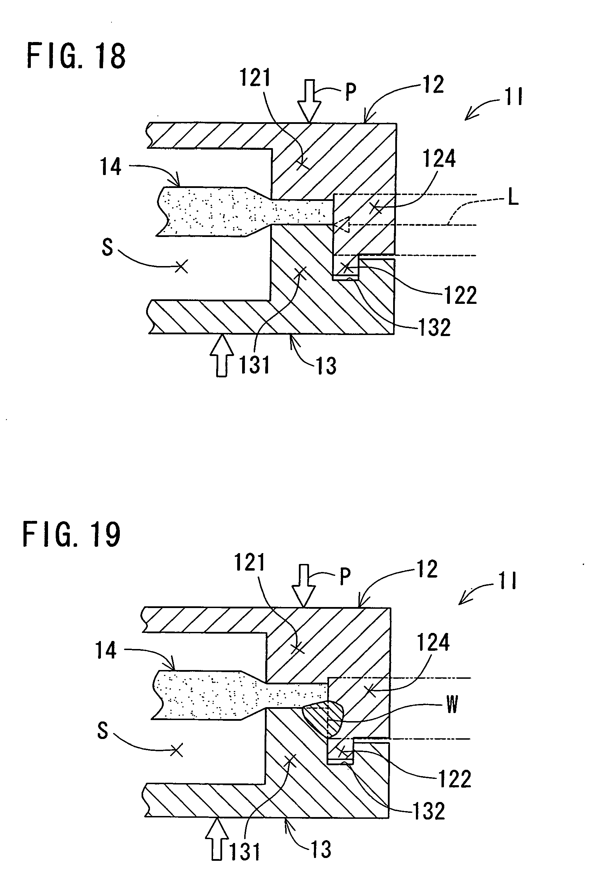

Configurations in which the case weld is not formed are possible, such as one in which the outer wall contacts the outer side surface of the tip of the joining portion on the second case member, and welds other than the element weld (W) are not formed (see FIG. 19). In this case, the element weld is formed extending up to the outer wall side.

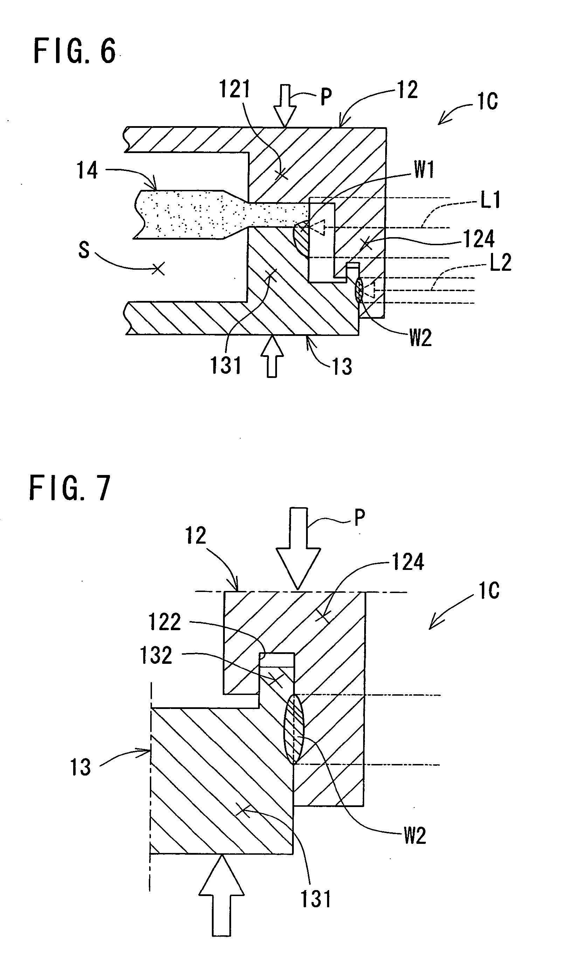

The first case member may also have, for example, an engaging portion (122), and an engaged portion (132) that is engaged by the second case member in the joining direction with the engaging portion (see FIG. 7).

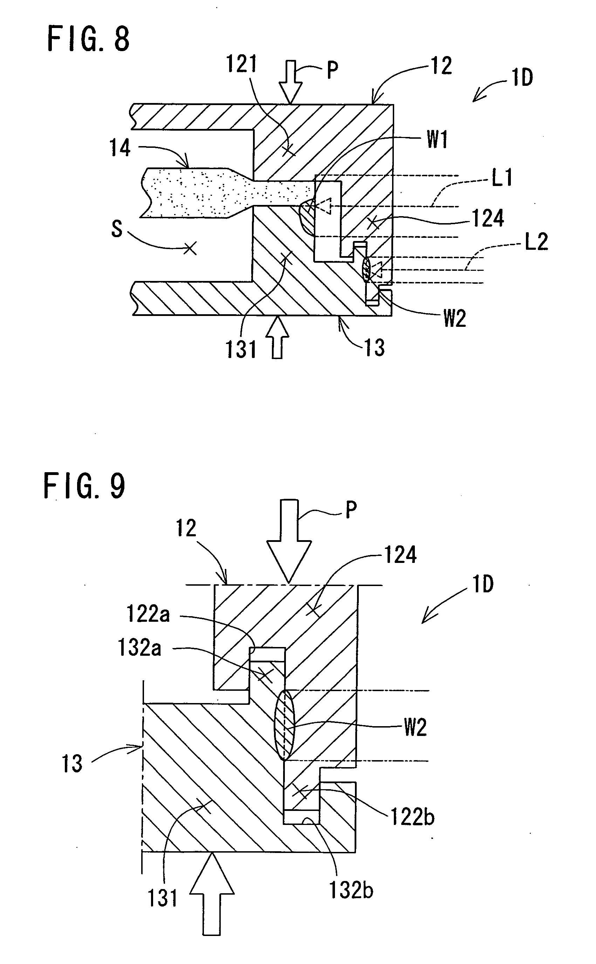

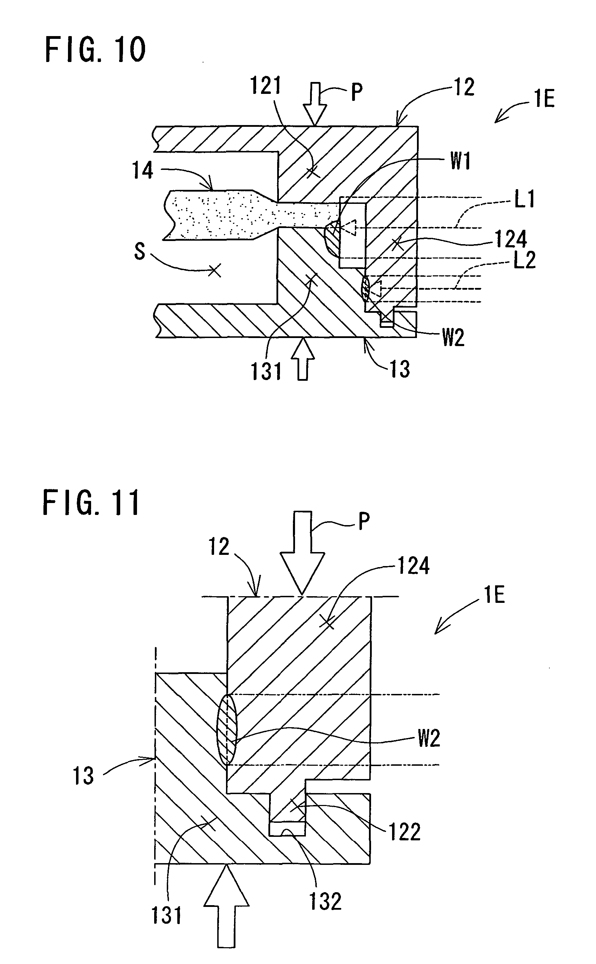

The "engaging portion" and "engaged portion" are not particularly limited in terms of shape, size, quantity or the like. These portions can be disposed as follows: (1) a configuration in which the engaging portion and the engaged portion are provided only on a filter chamber side of a weld formed at the contact area of the outer wall and the joining end of the second case member (see FIG. 6 and the like), (2) a configuration in which the engaging portion and the engaged portion are provided only on a side opposite the filter chamber side of the weld (see FIG. 10 and the like), and (3) a configuration in which the engaging portion and the engaged portion are provided on both the filter chamber side and the side opposite the filter chamber side of the weld (see FIG. 8 and the like).

Note that the above "weld formed at the contact area" is a case weld if a case weld is formed, and is an element weld if a case weld is not formed.

The engaging portion and the engaged portion may be engaged with a clearance of a predetermined distance (for example, 0.2 mm or less) in a direction orthogonal to the joining direction, and can be press-fit for engagement. If press-fit for engagement, the distance between the contact surfaces of the contact area of the outer wall and the second case member is preferably a clearance not greater than 0.2 mm in the engagement state prior to laser light irradiation. Although welding conditions and the like are also factors to be considered, it may not be possible to weld both members well if there is a clearance greater than 0.2 mm.

The engaging portion and the engaged portion may also be engaged with a clearance of a predetermined distance in the joining direction. Such a configuration allows for the absorption of relative movement in the joining direction of the first and second case members under pressure.

Also note that in cases where the engaging portion and the engaged portion are set in proximity to the weld, the engagement width (width in a direction orthogonal to the joining direction) of the engaging portion and the engaged portion may be 2 mm or greater. This can achieve a weld depth of approximately 1 mm on the second case member side of the weld. In addition, a 2-mm or more engagement width between the engaging portion and the engaged portion suppresses thermal deformation of the engaging portion and the engaged portion, and can also suppress welding burrs.

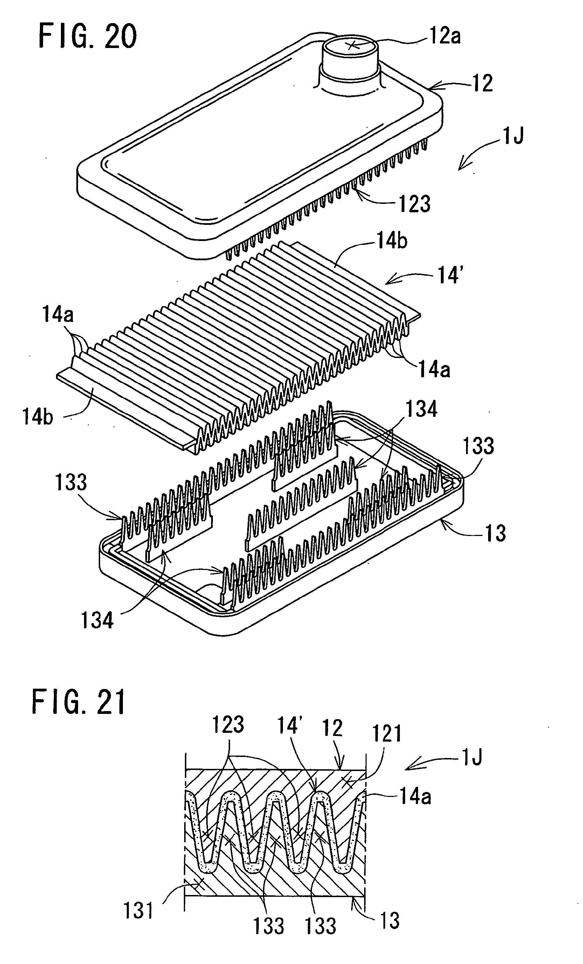

Comb-teeth-shaped portions (123, 133), for example, can be provided on the joining ends of the first and second case members (see FIG. 20 and the like). Consequently, a corrugated filter element can be directly held between the first and second case members without using a support frame or the like.

### 2. Manufacturing Method for Filter

A manufacturing method for a filter according to the present embodiment is a manufacturing method for a filter according to the first embodiment described above. The manufacturing method entails mutually joining a first case member and a second case member to form a filter chamber with a rim of a filter element in contact with the joining end of the second case member, which has laser absorbency. In such a state, laser light is then laterally radiated toward an outer side surface of a tip of the joining end on the second case member and the outer side surface of the filter element. Accordingly, an element weld is formed by laser light on an outer surface side of a contact area between the filter element and the joining end of the second case member.

Note that in cases where the filter element has laser permeability, laser light irradiation melts the outer side surface of the tip of the joining end on the second case member. Some of the melted portion penetrates to inside the filter element, and thus melts some of the filter element. Subsequent to cooling of the melted portion, an element weld is formed. In cases where the filter element has laser absorbency, laser light irradiation almost simultaneously melts the outer side surface of the tip of the joining end on the second case member and the outer side surface of the filter element. Once the melted portion is cooled, an element weld is formed.

The manufacturing method for a filter may press-fit the first case member and the second case member in the joining direction with the rim of the filter element sandwiched between the respective joining ends of the first case member and the second case member, and then radiate laser light on such a pressed state. Accordingly, laser light is irradiated with the filter element in a pressed state, which in turn increases the internal density of the filter element so as to improve the bond strength of the filter element and the second case member.

The manufacturing method for a filter may further include radiating laser light from the side of the outer wall provided on the first case member toward the contact area of the outer wall of the first case member and the joining end of the second case member. This achieves the formation of a case weld by laser light at the contact area of the outer wall and the joining end of the second case member.

It should be noted that laser light melts the contact area of the second case member, and the heat of the melted portion reaches and melts the contact area of the second case member. A case weld is then formed subsequent to cooling of both melted portions of the first and second case members. Also, laser light radiation forming the case weld and laser light radiation forming the element weld may be performed in a predetermined order or at the same time.

Another conceivable manufacturing method for a filter according to the present embodiment may also be a manufacturing method for a filter according to the first embodiment described above. The manufacturing method entails mutually joining a first case member and a second case member to form a filter chamber with a rim of a filter element in contact with the joining end of the second case member, which has laser absorbency. Additionally, an outer wall provided on the first case member is in contact with the outer side surface of the tip of the joining end on the second case member. In such a state, laser light is then laterally radiated toward the outer side surface of the tip of the joining end on the second case member and the outer side surface of the filter element.

Thus, the formation of an element weld is achieved by laser light on the outer surface side of the contact area of the filter element and the joining end of the second case member. The element weld is formed extending up to the outer wall side. Accordingly, in addition to welding the second case member and the filter element, the element weld also welds the first and second case members. A one-time application of laser irradiation can thus achieve the integration of three members, thereby shortening the laser irradiation period. Furthermore, since only one weld is provided, a simpler and more compact structure can be achieved.

Note that the manufacturing method for a filter can include, for example, radiating laser light while the first and the second case members are pressed as described above.

### (Second Exemplary Form)

### 1. Filter

A filter as follows in a second exemplary form below is provided with a first case member, a second case member, and a filter element to be described hereafter.

The "first case member" is not particularly limited in terms of shape, size, material or the like, provided that it is laser-permeable, and is mutually joined with the second case member described later to form a filter chamber. The first case member typically has a frame-shaped joining end. In addition, an inflow port and an outflow port for fluid, for example, can be formed on the first case member. Furthermore, conceivable shapes of the first case member include a dish shape, bowl shape, flat shape and the like.

The first case member can be formed from, for example, a synthetic resin material. The synthetic resin material may contain dye and/or pigment. From the standpoint of laser permeability, the first case member is preferably formed from a synthetic resin material containing dye. Synthetic resin material that may be used include, for example, amorphous resin such as polystyrene (PS), low-density polyethylene (LDPE), and polycarbonate (PC), and crystalline resin such as polypropylene (PP), polybutylene terephthalate (PBT), polyethylene terephthalate (PET), polyamide (PA), and polyacetal (POM). From the standpoint of laser permeability, an amorphous resin from among the examples is preferred.

The "second case member" is not particularly limited in terms of shape, size, material or the like, provided that it has laser absorbency, and is mutually joined with the first case member to form a filter chamber. The second case member typically has a frame-shaped joining end. In addition, an inflow port and an outflow port for fluid, for example, can be formed on the second case member. Furthermore, conceivable shapes of the second case member include a dish shape, bowl shape, flat shape and the like.

The second case member can be formed from, for example, a synthetic resin material. The synthetic resin material may contain dye and/or pigment. From the standpoint of enabling easily adjustment of a heated amount, the second case member is preferably formed from a synthetic resin material containing pigment and dye. Synthetic resin materials that may be used include amorphous resin such as polystyrene (PS), low-density polyethylene (LDPE), and polycarbonate (PC), and crystalline resin such as polypropylene (PP), polybutylene terephthalate (PBT), polyethylene terephthalate (PET), polyamide (PA), and polyacetal (POM). From the standpoint of laser absorbency, an amorphous resin or crystalline resin may be used.

The "filter element" (hereafter referred to simply as "element") is not particularly limited in terms of shape, size, material or the like, provided that it can be held between respective joining ends of the first case member and the second case member. Conceivable shapes of the element include a corrugated shape, sheet shape, wave shape and the like. A corrugated element can be, for example, (1) a configuration formed from an element body having a plurality of corrugated portions, or (2) a configuration formed from an element body having a plurality of corrugated portions, and a support frame that supports the element body. In addition, materials such as non-woven fabric, cloth, paper and the like can conceivably be used for the element. Note that the element may also have laser permeability or laser absorbency.

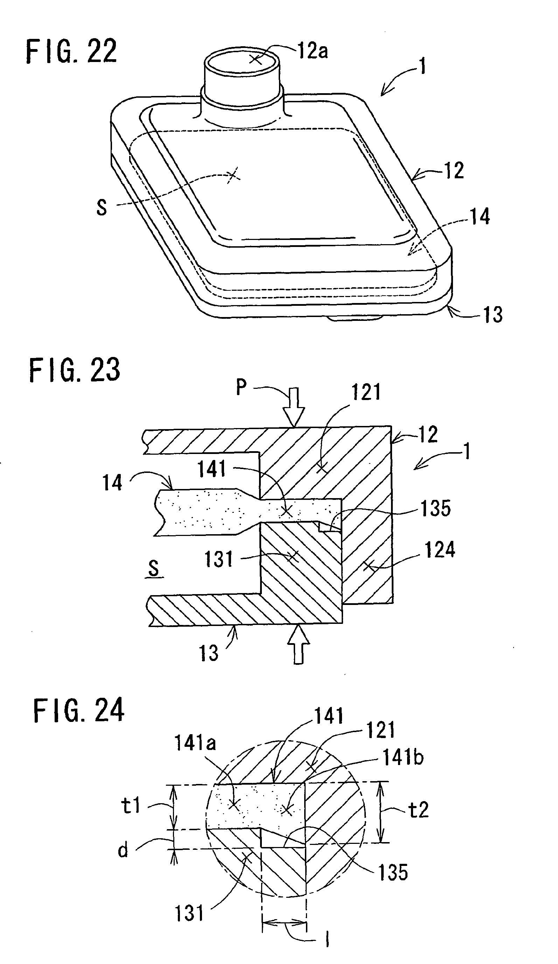

A notch (135) is provided on a top surface side in contact with an outer end (141) of a filter element (14) of at least one of the first case member and the second case member (see FIG 23).

The "notch" is not particularly limited in terms of shape, size, layout position or the like, provided that a portion of an outer end of the filter element can be disposed in a space therein.

Conceivable shapes of the notch include of combinations of one, two or more shapes among a stepped shape, chamfer shape, R-shape, arc shape, concave shape and the like. Possible layout configurations of the notch include: (1) providing the notch on a tip outer corner side of the joining end of the case member, or (2) providing the notch inward from the tip outer corner side (on the filter chamber side) of the joining end of the case member. In the former configuration, the outer side surface of the joining end of the case member and the outer side surface of the outer end of the filter element may be substantially on the same plane. Furthermore, the notch can be formed continuous on the entire periphery of the filter, or formed at predetermined intervals along the entire periphery of the filter.

The notch depth and notch width of the notch described above can be set as appropriate depending on the rigidity and the like of the filter element. The notch depth (depth in the joining direction) can be set to 0.5 mm to 3 mm (particularly 1 mm to 1.5 mm) and the notch width (width in a direction orthogonal to the joining direction) can be set to 1 mm to 3 mm (particularly 1.5 mm to 2.5 mm), from the standpoints of disposing a portion of the outer end of the filter element freely inside the space of the notch, and achieving an element weld to be described later for improving the weld strength of the filter element.

In a state where a portion of the outer end of the filter element is accommodated within the notch space, the outer end (141) of the filter element may include, for example, a supported portion (141a) and a foot portion (141b). The supported portion has a joining-direction thickness (t1) that is sandwiched between the first and second case members, and the foot portion has a joining-direction thickness (t2, a maximum thickness) that is greater than the thickness of the supported portion (see FIG. 24).

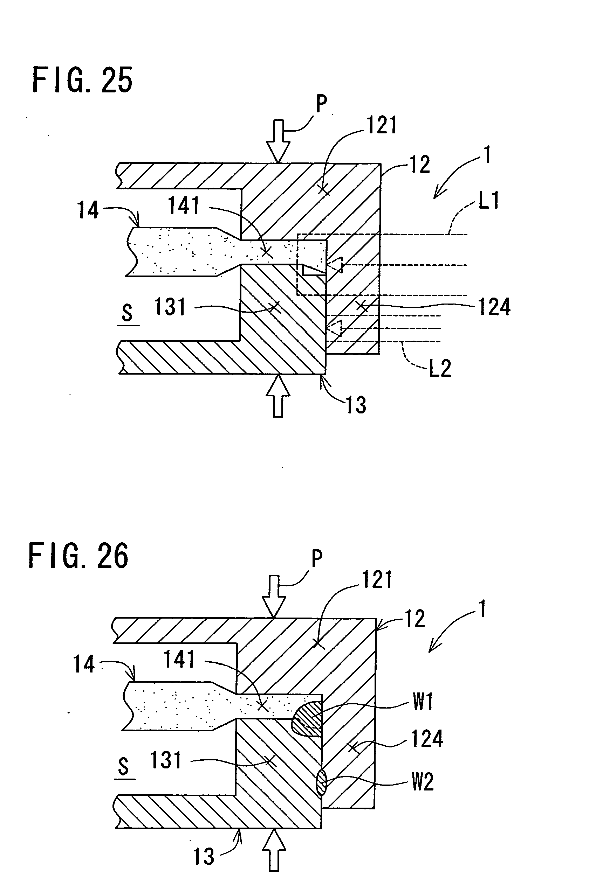

A portion of the outer end (141) of the filter element (14) accommodated within the notch space (135) structures an element weld (W1) by laser light (see FIG. 26).

The "element weld" is not particularly limited in terms of weld width, depth, shape or the like, provided that it can exercise a function to retain the filter element.

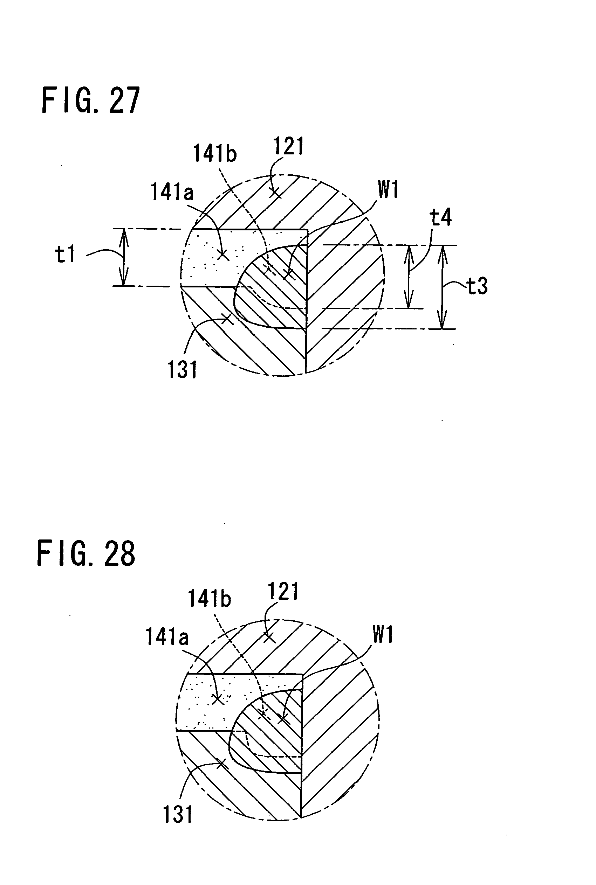

The element weld may join, for example, the second case member and the filter element, and can be provided on the outer surface side of the contact area between the filter element and the joining end of the second case member. In addition, a joining-direction thickness (t3) of the element weld can be made greater than the joining-direction thickness (t1) of the supported portion of the filter element, which is held between the first and second case members (see FIG. 27). Furthermore, a joining-direction thickness (t4) of a weld among the element weld that is structured on the foot side of the outer end of the filter element can also be made greater than the joining-direction thickness (t1) of the supported portion of the filter element, which is held between the first and second case members (see FIG. 27).

It is possible to form the element weld by laser light that is radiated toward the joining end of the second case member and/or the outer end of the filter element. In this case, the laser light can be radiated from the side.

Conceivable element welds, for example, include the following configurations. (1) A configuration for the filter element with laser permeability, where laser light irradiation melts the joining end of the second case member, and some of the melted portion penetrates to inside the filter element. Some of the filter element is thus melted, and the melted portion then hardens to form an element weld. (2) A configuration for the filter element with laser absorbency, where laser light irradiation almost simultaneously melts the joining end of the second case member and the filter element. The melted portion then hardens to form an element weld.

In the latter configuration, the laser absorbency of the filter element may be higher than the laser absorbency of the second case member. In such a case, laser light melts the outer end of the filter element, whereby some of the melted portion fills the notch and hardens so as to form the outer end of the filter element in a hooked shape (see FIG. 28) more easily caught by a corner of the case member.

Note that the weld described above typically contains bubbles and is formed through melting followed by hardening while undergoing thermal expansion.

The "laser light" is not particularly limited in terms of type, direction of radiation or the like. Types of laser light that may be used include, for example, semiconductor, gas, solid, liquid and other laser light. Furthermore, the laser light may be radiated while the first and second case members holding the filter element are pressed in the joining direction.

Also note that the laser light irradiation may be performed in a continuous and uniform manner along the periphery of the filter, so as to continuously form the element weld along the filter periphery.

The first case member may also have an outer wall (124) that extends along the joining direction and contacts the joining end of the second case member (see FIG. 26).

The "outer wall" is not particularly limited in terms of shape, size or the like. For example, the outer wall can be provided so as to cover the outer side surface of the filter element and the outer side surface of the tip of the second case member. In addition, the outer wall may contact the joining end of the second case member at a contact surface in an arbitrary direction. However, from the standpoint of ensuring that the clearance between contact surfaces of the outer wall and the second case member due to pressure applied by the first and second case members, the outer wall may be a contact surface that extends along the joining direction and contacts the joining end of the second case member.

Note that the "contact" mentioned above also includes cases in which a minute clearance (such as a clearance of 0.2 mm or less) capable of forming the weld by laser light is left between the opposing surfaces.

An element weld (W2) can be formed by laser light at the contact area between the outer wall and the joining end of the second case member (see FIG. 26).

The "case weld" is not particularly limited in terms of weld width, depth, shape or the like, provided that used for joining the first and second case members.

For example, the case weld can be formed by laterally radiating laser light from the outer wall of the first case member toward the contact area between the outer wall and the joining end of the second case member.

The "laser light" is not particularly limited in terms of type, direction of radiation or the like. Types of laser light that may be used include, for example, semiconductor, gas, solid, liquid and other laser light. Furthermore, the laser light may be radiated while the first and second case members are pressed in the joining direction.

Also note that the laser light irradiation may be performed in a continuous and uniform manner along the periphery of the filter, so as to continuously form the case weld along the filter periphery.

### 2. Manufacturing Method for Filter

A manufacturing method for a filter according to the present embodiment is a manufacturing method for a filter according to the first embodiment described above. The manufacturing method entails holding the filter element between the joining ends of the first case member and the second case member with a portion of the outer end of the filter element disposed within a space of a notch provided on at least one of the first case member and the second case member. With the filter held in such a state, laser light is radiated toward the joining end of the second case member and/or the outer end of the filter element.

"Radiating laser light" can also entail the laterally radiating laser light toward the joining end of the second case member and/or the outer end of the filter element, whereby the element weld can be formed with greater ease.

Note that with the irradiation of laser light, in cases where the filter element has laser permeability, laser light irradiation melts the outer corner side of the tip of the joining end on the second case member. Some of the melted portion penetrates to inside the filter element, and thus melts some of the filter element. Subsequent to hardening of the melted portion, an element weld is formed. In cases where the filter element has laser absorbency, laser light irradiation almost simultaneously melts the outer corner side of the tip of the joining end on the second case member and the outer side surface of the filter element. Once the melted portion is hardened, an element weld is formed.

The manufacturing method for a filter may further include radiating laser light from the side of the outer wall provided on the first case member toward the contact area of the outer wall of the first case member and the joining end of the second case member. This achieves the formation of a case weld at the contact area of the outer wall and the joining end of the second case member.

It should be noted that with the irradiation of laser light, laser light melts the contact area of the second case member, and the heat of the melted portion reaches and melts the contact area of the first case member. A case weld is then formed subsequent to hardening of both melted portions of the first and second case members. Also, laser light radiation forming the case weld and laser light radiation forming the element weld may be performed in a predetermined order or at the same time.

Also note that the structural elements used in the filter according to the first embodiment and the manufacturing method therefor, and the structural elements used in the filter according to the second embodiment and the manufacturing method therefor can be used in combination as appropriate.

### First Embodiment

Hereinafter, a specific description of the present invention will be given based on first to eighth working examples with reference to the accompanying drawings. Note that an oil filter for an automatic transmission of a vehicle is used as an example of a filter in the first to eighth working examples. Moreover, like reference numerals are assigned for substantially identical structural parts, and accompanying descriptions therefor are not repeated.

As FIG. 1 shows, a filter 1 according to the first to eighth working examples has an upper case member 12 (which is an example of a "first case member" according to the present invention) and a lower case member 13 (which is an example of a "second case member" according to the present invention) which are rectangular dish-shaped and joined together to form a filter chamber S. The filter 1 also has a sheet-shaped filter element 14 (hereinafter referred to simply as an "element") that is held between the case members 12 and 13. Formed on the lower case member 13 is an inflow port (not shown) for used oil, and an outflow port 12a is formed on the upper case member 12 for oil filtered by the element.

The upper case member 12 is made from a synthetic resin including dye, and has laser permeability. The lower case member 13 is made from a synthetic resin including pigments such as carbon black, and has laser absorbency. The element 14 is made from a non-woven fabric, and has laser permeability.

### (First Working Example)

A filter 1A according to the first working example will be described. To first explain a manufacturing method for the filter 1A, as shown in FIG. 2, the rim of an element 14 is accommodated between a joining end 121 of the upper case member 12 and a joining end 131 of the lower case member 13, and external force presses the case members 12 and 13 in a joining direction P. At this time, the rim of the element 14 has low density. While pressed in this manner, a laser light L1 is laterally radiated toward the outer side surface of the element 14 and the outer side surface of the tip of the joining end 131 on the lower case member 13.

It should be noted that a setting position for the rim of the element 14 with respect to the case member 12 and 13 is set to a position at which the rim does not protrude outward from the outer side surface of the joining ends 121 and 131 of the case members 12 and 13. Thus, the rim of the element 14 can be reliably pressed to achieve a stronger weld. In other words, there is no risk of the rim of the element 14 not being pressed at some regions, which could block the laser light L1.

The laser light L1 melts the outer side surface of the tip of the joining end 131 on the lower case member 13, which has laser absorbency. Such a melted portion has a predetermined melted depth in the radiation direction of the laser light L1 (a direction orthogonal to the joining direction). Therefore, a portion of the melted portion penetrates to inside structural fibers of the element 14 at a contact area between the melted portion and the element 14, and the heat of the melted portion reaches the element 14 to partially melt the structural fibers of the element 14. The laser light L1 with a predetermined heat so as to engender such a melted state is continuously radiated along the outer periphery of the filter 1A. Radiation of the laser light L1 is stopped thereafter and the melted portion is cooled so as to complete welding of the lower case member 13 and the element 14.

As shown in FIG. 3, on the filter 1A irradiated by the laser light L1, an element weld W 1 is formed by the laser light L 1 on the outer surface side of the contact area between the element 14 and the joining end 131 of the lower case member 13.

### (Second Working Example)

Next, a filter 1B according to a second working example will be described. In the filter 1B as shown in FIG. 4, an outer wall 124 is provided on the upper case member 12 continuous with the joining end 121 thereof and extending along the joining direction P. Similar to the first working example, the rim of the element 14 is accommodated between the joining ends 121 and 131 of the case members 12 and 13, and external force presses the case members 12 and 13 in the joining direction P.

In this case, the inner peripheral surface of the outer wall 124 is in contact with a contact surface extending along the joining direction P on the outer side surface of the base of the joining end 131 on the lower case member 13. In addition, the inner peripheral surface of the outer wall 124 faces the outer side surface of the tip of the joining end 131 on the lower case member 13 from a predetermined distance.

While the case members 12 and 13 are pressed, the laser light L1 is radiated from the side of the outer wall 124 toward the outer side surface of the element 14 and the outer side surface of the tip of the joining end 131 on the lower case member 13. Furthermore, a laser light L2 is radiated from the side of the outer wall 124 toward the contact area between the outer wall 124 and the joining end 131 of the lower case member 13.

The laser light L1 passes through the outer wall 124 to reach the outer side surface of the tip of the joining end 131 on the lower case member 13 and melt a region thereof. Some of the melted portion penetrates to inside the structural fibers of the element 14 and the heat of the melted portion reaches the element 14 to partially melt the structural fibers of the element 14.

Meanwhile, the laser light L2 passes through the outer wall 124 to reach the outer side surface of the base of the joining end 131 on the lower case member 13 and melt a region thereof. The heat of the melted portion reaches the outer wall 124 of the upper case member 12 to melt a region thereof.

As shown in FIG. 5, on the filter 1B irradiated by the laser lights L1 and L2, the element weld W1 is formed by the laser light L1 on the outer surface side of the contact area between the element 14 and the joining end 131 of the lower case member 13. Furthermore, a case weld W2 is formed by the laser light L2 at the contact area between the outer wall 124 of the upper case member 12 and the joining end 131 of the lower case member 13.

### (Third Working Example)

Next, a filter 1C according to a third working example will be described. Similar to the second working example, on the filter 1C as shown in FIG. 6, the element weld W1 is formed by the laser light L1 and the case weld W2 is formed by the laser light L2.

In the filter 1C as FIG. 7 shows, a concave portion 122 (which is an example of an "engaging portion" according to the present invention) is provided on the outer wall 124 of the upper case member 12. Furthermore, the base of the joining end 131 of the lower case member 13 is formed in an outwardly protruding flange shape, and this region is provided with a convex portion 132 (which is an example of an "engaged portion" according to the present invention) that engages with the concave portion 122 along the joining direction P.

The concave portion 122 and the convex portion 132 are disposed on the filter chamber S side of the case weld W2. Both the concave portion 122 and the convex portion 132 are set with an engagement width (a width orthogonal to the joining direction P) of approximately 2 mm. Provided between the concave portion 122 and the convex portion 132 are a clearance of a predetermined distance (for example, approximately 2 mm) in the joining direction P, and a clearance of a predetermined distance (for example, approximately 0.1mm) in a direction orthogonal to the joining direction P.

### (Fourth Working Example)

Next, a filter 1D according to a fourth working example will be described. Similar to the second working example, on the filter 1D as shown in FIG. 8, the element weld W1 is formed by the laser light L1 and the case weld W2 is formed by the laser light L2.

In the filter 1D as FIG. 9 shows, a first concave portion 122a and a second convex portion 122b (which are examples of an "engaging portion" according to the present invention) are provided on the outer wall 124 of the upper case member 12. Furthermore, the base of the joining end 131 of the lower case member 13 is formed in an outwardly protruding flange shape, and this region is provided with a first convex portion 132a and a second concave portion 132b (which are examples of an "engaged portion" according to the present invention) that engage with the first concave portion 122a and the second convex portion 122b along the joining direction P.

The first concave portion 122a and the second convex portion 122b are disposed on the filter chamber S side of the case weld W2, and the first convex portion 132a and the second concave portion 132b are disposed on a side opposite the filter chamber S side of the case weld W2. The first concave portion 122a and the second convex portion 122b, as well as the first convex portion 132a and the second concave portion 132b, are set with an engagement width (a width orthogonal to the joining direction) of approximately 2 mm. Provided between the first concave portion 122a and the second convex portion 122b, as well as between the first convex portion 132a and the second concave portion 132b, are a clearance of a predetermined distance (for example, approximately 2 mm) in the joining direction P, and a clearance of a predetermined distance (for example, approximately 0.1 mm) in a direction orthogonal to the joining direction P.

### (Fifth Working Example)

Next, a filter 1E according to a fifth working example will be described. Similar to the second working example, on the filter 1E as shown in FIG. 10, the element weld W1 is formed by the laser light L1 and the case weld W2 is formed by the laser light L2.

In the filter 1E as FIG. 11 shows, a convex portion 122 (which is an example of an "engaging portion" according to the present invention) is provided on the outer wall 124 of the upper case member 12. Furthermore, the base of the joining end 131 of the lower case member 13 is formed in an outwardly protruding flange shape, and this region is provided with a concave portion 132 (which is an example of an "engaged portion" according to the present invention) that engages with the convex portion 122 along the joining direction P.

The convex portion 122 and the concave portion 132 are disposed on a side opposite the filter chamber S side of the case weld W2. Both the convex portion 122 and the concave portion 132 are set with an engagement width (a width orthogonal to the joining direction P) of approximately 2 mm. Provided between the convex portion 122 and the concave portion 132 are a clearance of a predetermined distance (for example, approximately 2 mm) in the joining direction P, and a clearance of a predetermined distance (for example, approximately 0.1 mm) in a direction orthogonal to the joining direction P.

### (Sixth Working Example)

Next, a filter IF according to a sixth working example will be described. With the case members 12 and 13 pressed, on the filter IF as shown in FIG. 12, the inner peripheral surface of the outer wall 124 of the upper case member 12 is in contact with the outer side surface of the tip and the outer side surface of the base of the joining end 131 of the lower case member 13. The contact surface extends along the joining direction P.

Similar to the second working example, the laser lights L1 and L2 are radiated while the case members 12 and 13 are pressed.

The laser light L1 passes through the outer wall 124 to reach the outer side surface of the tip of the joining end 131 on the lower case member 13 and melt a region thereof. Some of the melted portion penetrates to inside the structural fibers of the element 14 and the heat of the melted portion reaches the element 14 to partially melt the structural fibers of the element 14. Furthermore, the heat of the melted portion reaches the outer wall 124 of the upper case member 12 to melt a region thereof. Thus, the element weld W1 is formed by the laser light L 1.

Meanwhile, the laser light L2 passes through the outer wall 124 to reach the outer side surface of the base of the joining end 131 on the lower case member 13 and melt a region thereof. The heat of the melted portion reaches the outer wall 124 of the upper case member 12 to melt a region thereof. Thus, the case weld W2 is formed by the laser light L2. Note that the phase of the direction orthogonal to joining direction P is aligned for the element weld W and the case weld W2.

In this case, the outer side surface of the tip of the joining end 131 on the lower case member 13 is heated by the laser light L1. However, the heated region is in contact with the outer wall 124 and thus cooled. Consequently, the most heated region of the joining end 121 of the upper case member 12 is on a side inward from the outer side surface of the tip. The weld depth of the element weld W1 in the filter IF thus becomes greater than the weld depth of the element weld W1 in the filter 1A of the first working example.

### (Seventh Working Example)

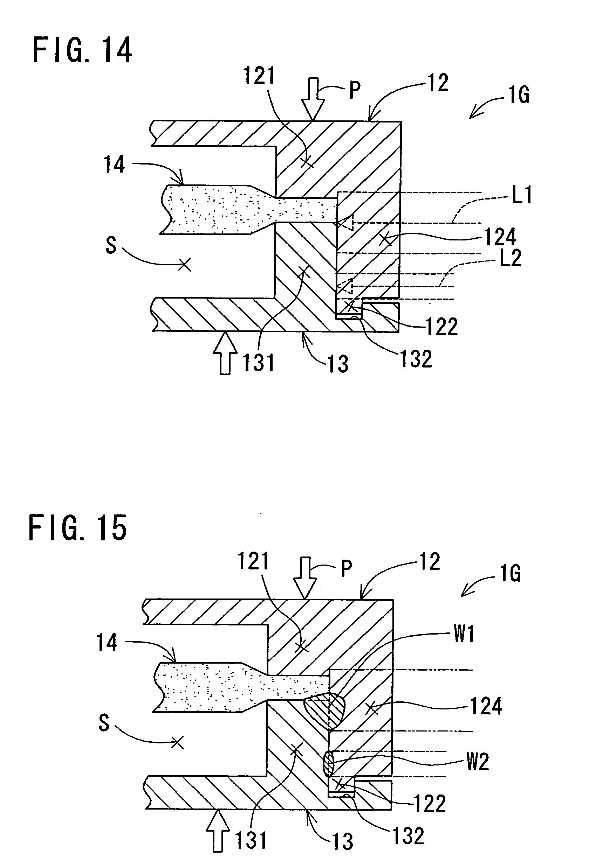

Next, a filter 1G according to a seventh working example will be described. Substantially similar to the fifth working example, on the filter 1G as shown in FIG. 14, the convex portion 122 (which is an example of an "engaging portion" according to the present invention) is provided on the outer wall 124 of the upper case member 12. In addition, the concave portion 132 (which is an example of an "engaged portion" according to the present invention) that engages with the convex portion 122 along the joining direction P is provided on the joining end 131 of the lower case member 13.

Similar to the sixth working example, on the filter 1G as shown in FIG. 15, the element weld W1 is formed by the laser light L1 and the case weld W2 is formed by the laser light L2.

### (Eighth Working Example)

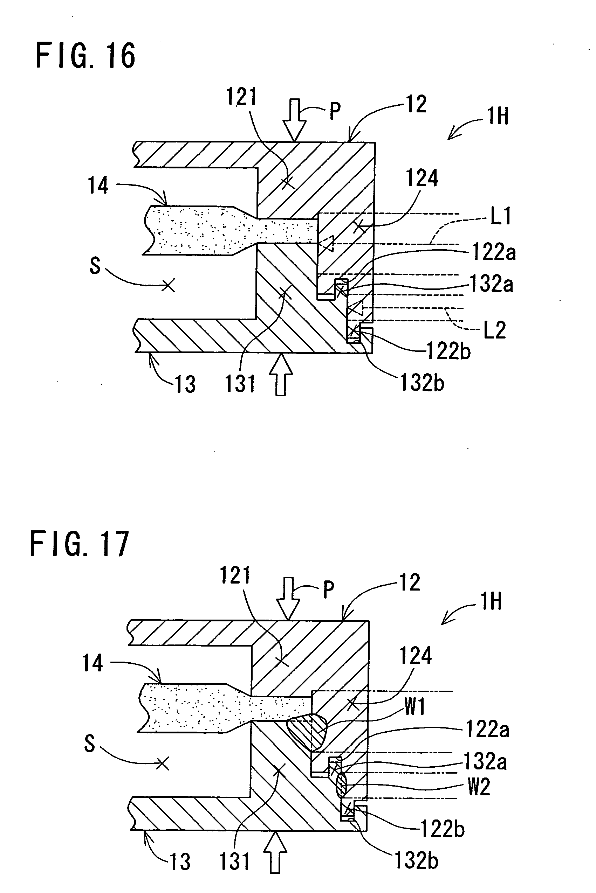

Next, a filter 1H according to an eighth working example will be described. Substantially similar to the fourth working example, on the filter 1H as shown in FIG. 16, the first concave portion 122a and the second convex portion 122b (which are examples of an "engaging portion" according to the present invention) are provided on the outer wall 124 of the upper case member 12. Furthermore, the joining end 131 of the lower case member 13 is provided with the first convex portion 132a and the second concave portion 132b (which are examples of an "engaged portion" according to the present invention) that engage with the first concave portion 122a and the second convex portion 122b along the joining direction P.

Similar to the sixth working example, on the filter 1H as shown in FIG 17, the element weld W1 is formed by the laser light L1 and the case weld W2 is formed by the laser light L2. Note that the phase of the direction orthogonal to the joining direction P is not aligned for the element weld W 1 and the case weld W2.

### (Effects of the Working Examples)

According to the filters 1 in the first to eighth working examples, laterally radiated laser light L1 forms the element weld W1 on the outer surface side of the contact area between the filter element 14 and the joining end 131 of the lower case member 13. The lower case member 13 and the filter element 14 are thus more solidly welded by the element weld W1. Accordingly, dislodging of the filter element 14 from between the upper case member 12 and the lower case member 13 can be suppressed even if excessive internal pressure occurs inside the filter chamber S during filter use. In addition, the element weld W1 is disposed sufficiently away from the filter chamber S. Consequently, any abnormalities such as welding burrs or the like that may occur near the element weld W1 due to output of the laser light L1 or the like can be restricted from passing between the contact surfaces of the lower case member 13 and the filter element 14 and penetrating to inside the filter chamber S. Tasks such as washing the inside of the filter chamber S after welding thus become unnecessary.

Compared to radiating laser light from the joining direction as in the past, the element W1 now makes it is possible to suppress the outward case dimensions to the minimum required amount in order to achieve a simple and compact structure. There is also no longer any need to pass the laser light through the filter element, which means the adoption of a filter element 14 with laser permeability is not mandatory, and a filter element 14 with laser absorbency can also be used. Furthermore, the edge of the filter element 14 is not exposed to inside the filter chamber S, so it is thus possible to prevent product performance from being affected by problems such as the loss of fibers or the like from the edge of the filter element 14. The need for past minute adjustments such as permeating melted laser absorbent material throughout the entire thickness of the filter element and hardening it are eliminated, and a function for adjusting the laser radiation heat that considers variations in transmittance and the like is also unnecessary.

According to the filters 1 in the second to eighth working examples, the upper case member 12 is provided with the outer wall 124 extending along the joining direction P. The outer wall 124 may be used to cover the outer side surface of the filter element 14, the element weld W1, and the case weld W2, thereby improving the appearance of the product.

Furthermore, the laser light L2 forms the case weld W2 at the contact area between the outer wall 124 of the upper case member 12 and the joining end 131 of the lower case member 13 in the filters 1 of the second to eighth working examples. Therefore, the upper case member 12 and the lower case member 13 are more solidly welded by the case weld W2. Compared to radiating laser light through the slit of a press jig as in the past, the weld width of the case weld W2 can be set sufficiently large so as to increase the bond strength of the case members 12 and 13.

According to the filters 1 in the second to eighth working examples, the outer wall 124 of the upper case member 12 contacts the joining end 131 of the lower case member 13 at a contact surface extending along the joining direction P. Thus when the case members 12 and 13 are pressed in the joining direction P, there is no change in the distance between the contact surfaces of the outer wall 124 and the joining end 131 of the lower case member 13, regardless of any relative shifts in distance along the joining direction P of the case members 12 and 13 due to the degree of pressure applied or the like. Consequently, a more reliable weld of the case members 12 and 13 can be achieved.

According to the filters 1 in the second to eighth working examples, three members consisting of the case members 12 and 13 and the filter element 14 are integrated by laser welding. Therefore, compared to the conventional practice of using vibration welding or the like to weld the three members consisting of the case members 12 and 13 and the filter element supported by a support frame made of synthetic resin, the production process can be shortened to approximately half. Furthermore, laser welding can be performed immediately after the formation of the case members 12 and 13, which can contribute to automating formation of the case members 12 and 13 up to the completion of laser welding so as to reduce the man-hours for each operation.

According to the filters 1 in the second to fifth working examples, the outer wall 124 of the upper case member 12 faces the outer side surface of the tip of the joining end 131 on the lower case member 13, with a space of a predetermined distance therebetween. Therefore, any welding burrs that may occur on the element weld W1 can be easily guided to the space of a predetermined distance. This in turn can more reliably suppress the penetration of the welding burrs to inside the filter chamber S.

According to the filters 1 in the sixth to eighth working examples, the outer wall 124 of the upper case member 12 is in contact with the outer side surface of the tip of the joining end 131 on the lower case member 13. Thus when forming the element weld W1, the outer surface (heated portion) of the melted portion is cooled by the outer wall 124. Compared to cases where there is no contact of the outer wall 124 (as in the filters 1 of the second to fifth working examples), a greater weld depth of the element weld W1 can be achieved for an increase in the bond strength of the lower case member 13 and the filter element 14. In addition, the element weld W1 is formed extending up to the outer wall 124 side, therefore, the case members 12 and 13 are more solidly welded by the element weld W1 and the case weld W2.

According to the filters 1 in the third to fifth, seventh and eighth working examples, the upper case member 12 and the lower case member 13 are provided with the engaging portion 122 and the engaged portion 132 which engage in the joining direction P. Therefore, curling of the outer wall 124 such as that caused by thermal expansion of a melted portion thereof during formation of the case weld W2 can be suppressed through the engagement of the engaging portion 122 and the engaged portion 132. In addition, an initial clearance in a direction orthogonal to the joining direction P between the outer wall 124 of the upper case member 12 and the joining end 131 of the lower case member 13 may be controlled to a predetermined value (such as approximately 0.2 mm) or less.

According to the filters 1 in the third, fourth and eighth working examples, the engaging portion 122 and the engaged portion 132 are provided on the filter chamber S side of the case weld W2. Therefore, any abnormalities such as welding burrs or the like that may occur near the case weld W2 can be restricted from penetrating to inside the filter chamber S.

According to the filters 1 in the fourth, fifth, seventh and eighth working examples, the engaging portion 122 and the engaged portion 123 are provided on the side opposite the filter chamber S side of the case weld W2. Therefore, any abnormalities such as welding burrs or the like that may occur near the case weld W2 can be restricted from reaching the case exterior.

Furthermore, according to the filters 1 in the fourth and eighth working examples, the engaging portion 122 and the engaged portion 123 are provided on both the filter chamber S side and the side opposite the filter chamber S side of the case weld W2. Therefore, curling of the outer wall 124 of the upper case member 12 can be more reliably suppressed, and the initial clearance between the contact surfaces of the outer wall 124 and the lower case member 13 can be controlled to a predetermined value (such as approximately 0.2 mm).

It should be noted that the present invention is not limited to the working examples described above, and various modified working examples are possible that fall within the scope of the present invention depending on the purpose and application. More specifically, the element weld W1 and the case weld W2 are provided by the laser lights L1 and L2 in the filters 1 according to the second to eighth working examples described above. However, the present invention is not limited by this, and a filter 1I that has only one element weld W1 is also possible.

More specifically, in the filter 1I as shown in FIG. 18, while the case members 12 and 13 are pressed, the inner peripheral surface of the outer wall 124 is in contact with a contact surface extending along the joining direction P on the outer side surface of the tip of the joining end 131 on the lower case member 13. The convex portion 122 (which is an example of an "engaging portion" according to the present invention) is provided on the outer wall 124 of the upper case member 12. The convex portion 122 is engaged along the joining direction P with the concave portion 132 (which is an example of an "engaged portion" according to the present invention) provided on the joining end 131 of the lower case member 13.

While the case members 12 and 13 are pressed, laser light L is radiated from the side of the outer wall 124 toward the outer side surface of the element 14 and the outer side surface of the tip of the joining end 131 on the lower case member 13. In so doing, an element weld W is formed extending up to the outer wall 124 side on the outer surface side of the contact area between the element 14 and the joining end 131 of the lower case member 13 as shown in FIG. 19.

Consequently, the three members consisting of the case members 12 and 13 and the filter element 14 are welded by the element weld W. Therefore, a one-time application of laser irradiation can thus achieve the integration of the three members, thereby shortening the laser irradiation period. Furthermore, since only the one element weld W is provided, a simpler and more compact structure can be achieved.

The filters described in the first to eighth working examples are cases provided with a sheet-shaped filter element 14. However, the present invention is not limited by this, and a filter provided with a corrugated filter element supported by a support frame made of synthetic resin is also possible.

Furthermore, a filter 1J with a corrugated filter element 14' is also conceivable. More specifically, in the filter 1J as shown in FIGS. 20 and 21, comb-teeth-shaped portions 123 and 133 are formed on the joining ends 121 and 131 of the case members 12 and 13. With the case members 12 and 13 pressed, a corrugated portion 14a of the filter element 14' is held between the comb-teeth-shaped portion 123 and 133 of the case members 12 and 13. In this state, laser light is laterally radiated toward the outer side surface of the filter element 14' and the comb-teeth-shaped portions 123 and 133 to form the element weld, which welds the three members 12, 13 and 14'.

In this manner, laser light is radiated from the side of the filter 1J so as to weld the corrugated filter element 14' to the lower case member 13. Therefore, compared to radiating laser light from the pressing direction (the joining direction P) of the case members 12 and 13 as in the past, laser light can be radiated orthogonal to the absorbent side of the welded member (the lower case member 13) to achieve a reliable welding of the welded member. Furthermore, radiating laser light with a predetermined radiation width relieves the need for aligning the focal distance of the laser light to the weld region along the corrugated portion 14a, thus making a more reliable weld possible.

It should be noted that with the filter 1J, provided in the inner side area of joining ends 121 and 131 of the case members 12 and 13 are a plurality of supporting comb-teeth-shaped portions that are used for supporting the corrugated portion 14a of the filter element 14' (only a supporting comb-teeth-shaped portion 134 of the lower case member 13 is shown in FIG. 20). In addition, a sheet-shaped portion 14b of the filter element 14' is held between the joining ends 121 and 131 of the case members 12 and 13, similar to the first to eighth working examples.

According to the filters 1 in the fourth, fifth, seventh and eighth working examples, the position of the outer side surface of the outer wall 124 of the upper case member 12 and the position of the outer side surface of the joining end 131 of the lower case member 13 substantially coincide. However, the present invention is not limited by this, and for example, the position of the outer side surface of the outer wall 124 of the upper case member 12 may coincide with the position of the outer side surface of the engaging portion 122.

In the first to eighth working examples, the laser lights L1 and L2 are radiated from a direction orthogonal to the joining direction P. However, the present invention is not limited by this, and for example, the laser lights L1 and L2 may be radiated from a direction intersecting the joining direction P in order to form the element weld W1 or the case weld W2.

In addition, according to the filters 1 in the second to eighth working examples, the outer wall 124 is only provided on the upper case member 12. However, the present invention is not limited by this, and for example, an outer wall may be provided only on the lower case member 13, or an outer wall may be provided on both the case members 12 and 13.

Furthermore, according to the filters 1 in the third to fifth, seventh and eighth working examples, the engaging portion 122 and the engaged portion 132 are provided continuously along the periphery of the case members 12 and 13. However, the present invention is not limited by this, and for example, a plurality of engaging portions and engaged portions may be provided at predetermined intervals along the periphery of the case members 12 and 13.

Types of laser light that may be used include, for example, semiconductor, gas, solid, liquid and other laser light.

The present invention is used as a filter that filtrates contaminated fluid, and more specifically, the filter is more suitably used as an oil filter for an automatic transmission of a vehicle.

### Second Embodiment

Hereinafter, a specific description of the present invention will be given based on a working example with reference to the accompanying drawings. Note that an oil filter for an automatic transmission of a vehicle is used in the working example as an example of a filter according to the present invention.

As FIG. 22 shows, a filter 1 according to the present working example has an upper case member 12 (which is an example of a "first case member" according to the present invention) and a lower case member 13 (which is an example of a "second case member" according to the present invention) which are rectangular dish-shaped and joined together to form a filter chamber S. The filter 1 also has a sheet-shaped filter element 14 (also hereinafter referred to simply as an "element") that is held between the case members 12 and 13. Formed on the lower case member 13 is an inflow port (not shown) for used oil, and an outflow port 12a is formed on the upper case member 12 for oil filtered by the element.

The upper case member 12 is made from a synthetic resin including dye, and has laser permeability. As shown in FIG. 23, an outer wall 124 is provided on the outer side of the joining end 121 of the upper case member 12, which extends along the joining direction P and is in contact with the outer side surface of the joining end 131 of the lower case member 13. The lower case member 13 is made from a synthetic resin including pigments such as carbon black, and has laser absorbency. A notch 135 with a stepped shape is formed on the tip outer corner side of the joining end 131 of the lower case member 13. As shown in FIG. 24, the notch 135 has a notch depth d of 1.3 mm and a notch width w of 2 mm. The element 14 is made from a non-woven fabric, and has laser permeability.

The following is a description of a manufacturing method for the filter 1. As shown in FIG. 23, an outer end 141 of the element 14 is held between the joining ends 121 and 131 of the upper and lower case members 12 and 13, and both case members 12 and 13 are pressed in the joining direction P. In so doing, as shown in FIG. 24, the foot side of the outer end 141 of the element 14 is accommodated within the space of the notch 135. In this case, the outer end 141 of the element 14 has a high-density supported portion 141a and a low-density foot portion 141b. The supported portion 141a is supported between the first and second case members 12 and 13, and has a predetermined thickness t1. The foot portion 141 b has a thickness t2 greater than the supported portion 141 a. In addition, the outer side surface of the joining end 131 of the lower case member 13 and the outer side surface of the outer end 141 of the element 14 are on the same plane (see FIG. 23).

With the element 14 held and pressed, as shown in FIG. 25, a first laser light L1 is radiated from outside the outer wall 124 of the upper case member 12 in a direction that intersects (is orthogonal to) the joining direction P toward the outer side surface of the element 14 and the tip outer corner side of the joining end 131 of the lower case member 13. Due to the first laser light L1, the tip outer corner side of the joining end 131 of the lower case member 13 first starts to melt, and some of the melted resin subsequently penetrates to inside the structural fibers of the foot portion 141b of the element 14. Once the penetrating melted resin hardens, as shown in FIG. 26, an element weld W1 is formed on the outer surface side of a contact area between the element 14 and the joining end 131 of the lower case member 13 so as to join the two.

As shown in FIG. 27, a thickness t3 of the element weld W 1 is greater than the thickness t1 of the supported portion 141a of the filter element 14, which is held between the upper and lower case members 12 and 13. Moreover, a joining-direction thickness t4 of the welded region among the element weld W1 that is structured by the foot portion 141b of the filter element 14 is also greater the thickness t1 of the supported portion 141a of the filter element 14, which is held between the upper and lower case members 12 and 13.

The element weld W1 is formed on the entire periphery of the filter 1 by continuously radiating the first laser light L1 along the outer periphery of the filter 1, the first laser light L1 having a predetermined heat for achieving the above-described melted state. The element weld W1 may be structured so as to include a portion in which the structural fibers of the element 14 are partially melted and hardened with the heat from the melted resin of the lower case member 13 reaching the element 14.

With the upper and lower case members 12 and 13 held and pressed, as shown in FIG. 25, a second laser light L2 is radiated from the side of the outer wall 124 in a direction that intersects (is orthogonal to) the joining direction P toward the contact area between the outer wall 124 of the upper case member 12 and the joining end 131 of the lower case member 13. Due to the second laser light L2, some of the outer surface side of the joining end 131 of the lower case member 13 starts to melt, and the heat of the melted resin reaches the outer wall 124 of the upper case member 12 to melt a region thereof. Once the melted resin hardens, as shown in FIG. 26, a case weld W2 is formed between the outer wall 124 of the upper case member 12 and the joining end 131 of the lower case member 13 so as to join the two.

Note that the case weld W2 is formed on the entire periphery of the filter 1 by continuously radiating the second laser light L2 along the outer periphery of the filter 1, the second laser light L2 having a predetermined heat for achieving the above-described melted state.

### (Effects of the Working Example)

According to the filter 1 of the present working example, the foot portion of the outer end 141 of the filter element 14 is disposed within the space of the notch 135 provided in the lower case member 13, and at least the foot portion structures the element weld W1 by laser light. Therefore, a stronger weld is achieved between the lower case member 13 and the filter element 14 resulting from the element weld W1. In addition, excessive internal pressure within the filter chamber S during filter use may damage the element weld W1 or the like and cause misalignment of the lower case member 13 and the filter element 14. In such cases, the foot portion 141 b of the filter element 14 structuring the element weld W1 catches on the corner of the joining end 131 of the lower case member 13 so as to suppress dislodging of the filter element 14 from between the upper and lower case members 12 and 13. Consequently, an element-supporting rib that is provided on the case member side can be minimized as much as possible (basically to zero), and the insertion width of the element 14 can be set smaller. Therefore, the product shape of the filter 1 can be simplified and made more compact.

In the present working example, the element weld W1 is provided on the outer surface side of the contact area between the filter element 14 and the joining end 131 of the lower case member 13. Consequently, any abnormalities such as welding burrs or the like that may occur near the element weld W1 due to the output of the first laser light L1 or the like can be restricted from passing between the contact surfaces of the lower case member 13 and the filter element 14, and penetrating to inside the filter chamber S. Furthermore, the outer end of the filter element 14 is not exposed to inside the filter chamber S, thus making the penetration of fibers or the like that have broken off from the outer end of the filter element 14 to inside the filter chamber S difficult. The need for past minute adjustments such as permeating melted laser absorbent material throughout the entire thickness of the filter element and hardening it are eliminated, and a function for adjusting the laser radiation heat that considers variations in transmittance and the like is also unnecessary.

With the filter 1 according to the present working example, compared to using a slotted press jib and radiating laser light from the joining direction as in the past, the element weld W1 now makes it is possible to suppress the outward case dimensions to the minimum required amount in order to achieve a simple and compact structure for the filter overall.

In the present working example, three members consisting of the upper case member 12, the lower case member 13 and the filter element 14 are integrated by laser welding. Therefore, compared to using vibration welding or the like to weld the three members consisting of the case members and the filter element supported by a support frame made of synthetic resin, the production process can be shortened to approximately half. Furthermore, laser welding can be performed immediately after the formation of the case members, which can contribute to automating formation of the case members up to the completion of laser welding so as to reduce the man-hours for each operation. There is also a high freedom of design with regard to the shape of the case members and the like.

According to the present working example, the thickness t3 of the element weld W1 and the thickness t4 of the element weld W1 structured by the foot of the outer end 141 of the filter element 14 are both greater than the thickness t1 in the joining direction P of the supported portion 141 a of the filter element 14. External force applied in the dislodging direction of the filter element 14 may damage the element weld W1 or the like and cause misalignment of the lower case member 13 and the filter element 14. In such cases, the outer end 141 of the filter element 14 catches on the lower case member 13 so as to more reliably suppress dislodging of the filter element 14.

In the present working example, the notch 135 is provided on the tip outer corner side of the joining end 131 of the lower case member 13. Therefore, the element weld W1 can be disposed at a more separated position from the filter chamber S so as to more reliably suppress the penetration of abnormalities to inside the filter chamber S. In addition, the foot portion of the outer end 141 of the filter element 14 can be more reliably disposed within the space of the notch 135.

According to the present working example, the outer side surface of the joining end 131 of the lower case member 13 and the outer side surface of the outer end 141 of the filter element 14 are substantially on the same plane. Thus in addition to suppressing the dimensions of the outer end 141 of the filter element 14 to the minimum required, an element weld W1 can be formed that is capable of further increasing the weld strength (dislodging strength) of the filter element 14. In particular, this facilitates the penetration of resin melted by laser light on the tip outer corner side of the joining portion of the lower case member to inside the structural fibers of the foot portion 141b of the filter element.

In the present working example, the case weld W2 is provided at the contact area between the outer wall 124 of the upper case member 12 and the joining end 131 of the lower case member 13. In addition to the solid welding of the lower case member 13 an the filter element 14 by the element weld W1, the upper and lower case members 12 and 13 are solidly welded by the case weld W2. Consequently, the three members consisting of the upper case member 12, the lower case member 13 and the filter element 14 can be solidly integrated.

According to the present working example, the first and second laser lights L1 and L2 are laterally radiated toward the joining end 131 of the lower case member 13. Therefore, the element weld W1 and the case weld W2 can be efficiently formed by laser irradiation generated from the same direction. It is thus no longer necessary to adopt a filter element 14 with laser permeability.

Note that the present invention is not limited to the working example described above, and various modified working examples are possible that fall within the scope of the present invention depending on the purpose and application. More specifically, a configuration using a filter element 14 with laser permeability was given as an example, but the present invention is not limited by this and a filter element with laser absorbency, for example, may also be used. In particular, if the laser absorbency of the filter element 14 is higher than the laser absorbency of the lower case member 13, the outer end 141 of the filter element melts first, and then the tip outer corner side of the joining end 131 of the lower case member 13 is subsequently melted. The melted resin of the outer end 141 of the filter element 14 thus fills the space of the notch 135 and hardens. Therefore, as shown in FIG. 28, the foot portion 141 b of the filter element 14 takes on a hooked shape (indicated by a broken line in the figure), and becomes more prone to catching on the corner of the lower case member 13. Dislodging of the filter element 14 can thus be more reliably suppressed.

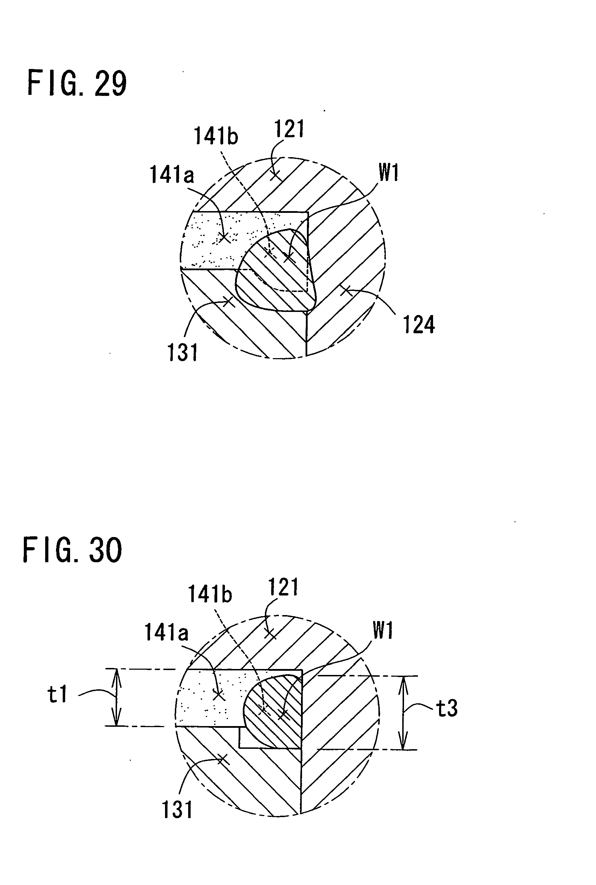

In the present working example, the element weld W1 is described as joining the two members consisting of the lower case member 13 and the filter element 14. However, the present invention is not limited by this, and as shown in FIG. 29, the element weld W1 may join the upper case member 12, the lower case member 13 and the filter element 14. Furthermore, as shown in FIG. 30, the element weld W1 may be provided on only the outer end 141b of the filter element 14. In such a case, the thickness t3 of the element weld W1 is greater than the thickness t1 of the supported portion 141a of the filter element 14.

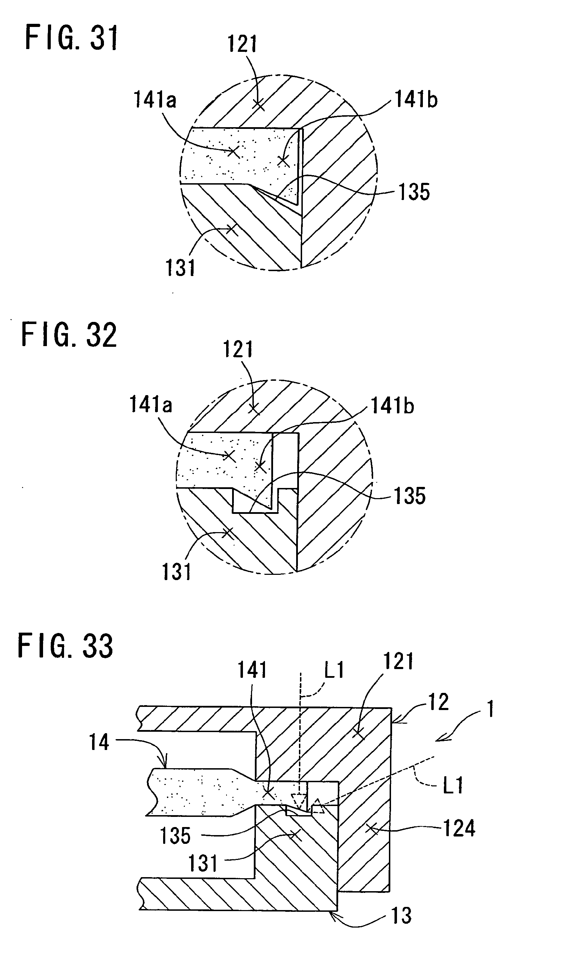

In addition, the notch 135 was described as having a stepped shape in the above working example. However, the present invention is not limited by this and a chamfered notch 135 (see FIG. 31), and a concave-shaped notch 135 (see FIG. 32) are also possible.

Moreover, the above working example describes a configuration in which the notch 135 is provided on the tip outer corner side of the joining end 131 of the lower case member 13. However, the present invention is not limited by this, and as shown in FIG. 33, the notch 135 may be provided in a substantially central portion of the tip surface of the joining end 131 of the lower case member 13.

The above working example describes a configuration in which the first laser light L1 is radiated from a direction orthogonal to the joining direction P to form the element weld W1. However, the present invention is not limited by this, and as shown in FIG. 33, the first laser light L1 may be radiated from a direction diagonally intersecting the joining direction P or the first laser light L1 may be radiated from the joining direction P to form the element weld W1.

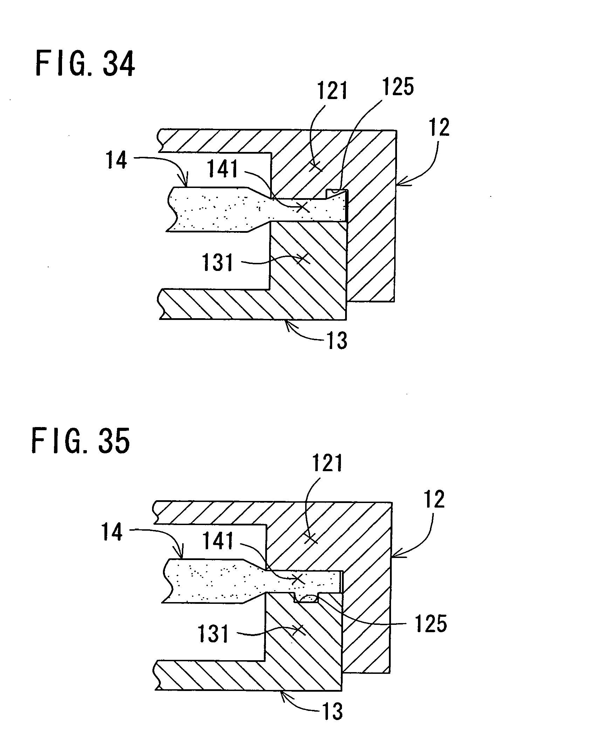

In addition, the above working example describes a configuration in which the notch 135 is provided on only the lower case member 13. However, the present invention is not limited by this, and a notch 125 (see FIG. 34) may be provided on only the upper case member 12, or notches may be provided on both the upper and lower case members.

According to the configuration described in the above working example, the foot portion of the outer end 141 of the filter element 14 is accommodated within the space of the notch 135. However, the present invention is not limited by this, and as shown in FIG. 35, an intermediate portion of the outer end 141 of the filter element 14 may be accommodated within the space of the notch 135 with the element weld W1 formed in this region.

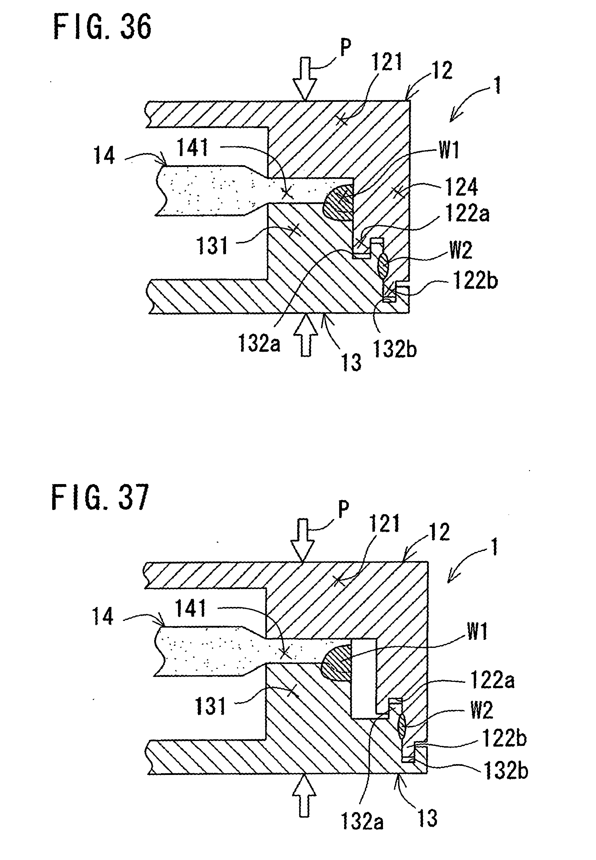

The above working example describes a configuration in which the outer wall 124 of the upper case member 12 and the joining end 131 of the lower case member 13 being in contact along contact surfaces following the joining direction P. However, the present invention is not limited by this, and as shown in FIGS. 36 to 38, the upper case member 12 may have the engaging portions 122a and 122b, and the lower case member 13 may have the engaged portions 132a and 132b that engage with the engaging portions 122a and 122b in the joining direction P. Therefore, curling of the outer wall 124 such as that caused by thermal expansion of a melted portion thereof during formation of the case weld W2 can be suppressed through the engagement of the engaging portions 122a and 122b and the engaged portions 132a and 132b. In addition, an initial clearance in a direction orthogonal to the joining direction P between the outer wall 124 of the upper case member 12 and the joining end 131 of the lower case member 13 may be controlled to a predetermined value (such as approximately 0.2 mm) or less.

Also note that in the configurations shown in FIGS. 36 to 38, the engaging portions and the engaged portions are provided on both the filter chamber S side and the side opposite the filter chamber S side of the case weld W2. However, the engaging portion and the engaged portions need only be provided on at least one side among the filter chamber S side and the side opposite the filter chamber S side of the case weld W2. By providing such portions on the filter chamber S side of the case weld W2, the penetration of welding burrs occurring near the welded region to inside the filter chamber S can be restricted. Providing such portions on the side opposite the filter chamber S side can restrict welding burrs occurring near the welded region from reaching outside.

The engaging portions and the engaged portions may be engaged with a clearance of a predetermined distance (for example, 0.2 mm or less) in a direction orthogonal to the joining direction, and can be press-fit for engagement. If press-fit for engagement, the distance between the contact surfaces of the contact area of the outer wall 124 and the lower case member 13 is preferably a clearance not greater than 0.2 mm in the engagement state prior to laser light irradiation. Although welding conditions and the like are also factors to be considered, it may not be possible to weld both members well if there is a clearance greater than 0.2 mm. The engaging portions and the engaged portions may also be engaged with a clearance of a predetermined distance in the joining direction P. Such a configuration allows for the absorption of relative movement in the joining direction of the first and second case members under pressure. Also note that in cases where the engaging portions and the engaged portions are set in proximity to the case weld, the engagement width (width in a direction orthogonal to the joining direction) of the engaging portions and the engaged portions may be 2 mm or greater. This can achieve a weld depth of approximately 1 mm on the lower case member 13 side of the case weld W2. In addition, a 2-mm or more engagement width between the engaging portions and the engaged portions suppresses thermal deformation of the engaging portions and the engaged portions, and can also suppress welding burrs.

Furthermore, the engaging portions and the engaged portions can be formed continuous on the entire periphery of the filter, or formed at predetermined intervals along the entire periphery of the filter.

The above working example describes a configuration in which the outer wall 124 of the upper case member 12 and the outer end 141 of the element 14 are in contact. However, the present invention is not limited by this, and as shown in FIG. 37, the outer wall 124 and the outer end 141 of the element 14 may face each other from a predetermined distance. In this case as well, an operation and effects substantially identical to those in the working example described above can be achieved.

In a configuration where the outer wall 124, the outer end 141 of the element 14, and the joining end 131 of the lower case member 13 are in contact (see FIG. 26 and the like) as described in the above working example, the outer wall 124 cools the welded region (heated region) during formation of the element weld W1. Consequently, the most heated region of the joining end 121 of the upper case member 12 is on a side inward from the outer side surface of the tip. A greater weld depth of the element weld W1 can thus be achieved for an increase in the bond strength of the lower case member 13 and the filter element 14. Moreover, the adoption of a lower case member 13 with low absorbency can further increase the weld depth of the element weld W1.

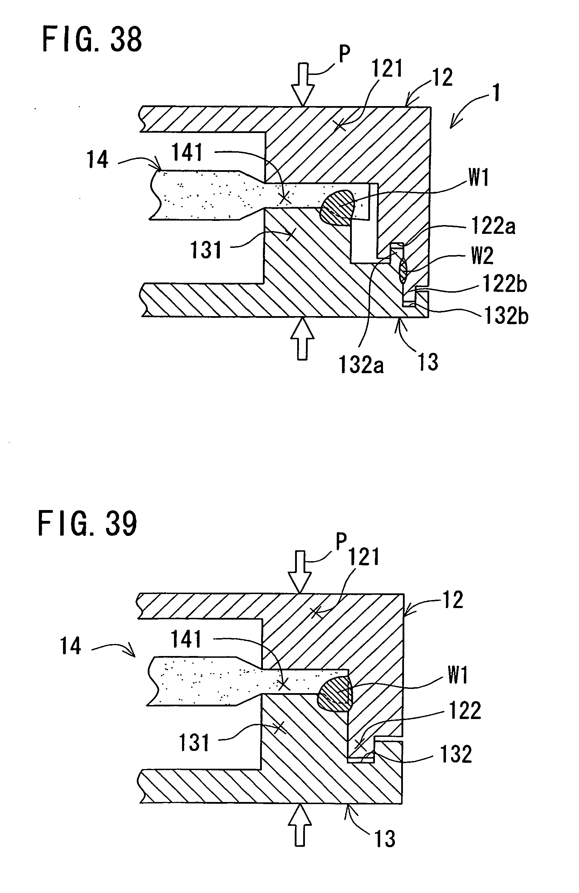

The above working example describes a configuration in which the outer side surface of the lower case member 13 and the outer side surface of the outer end 141 of the filter element 14 are at substantially the same position. However, the present invention is not limited by this, and as shown in FIG. 38, the outer side surface of the outer end 141 of the filter element 14 may be positioned farther outward than the outer side surface of the lower case member 13. Alternatively, the outer side surface of the outer end 141 of the filter element 14 may also be positioned farther inward than the outer side surface of the lower case member 13 as shown in FIGS. 32 and 33.

In the above working example, a configuration is described as providing the element weld W1 and the case weld W2. However, the present invention is not limited by this, and as shown in FIG. 39, only an element weld W2 may be provided that joins the three members consisting of the upper case member 12, the lower case member 13 and the filter element 14, without using the case weld W2. Thus in addition to shortening the laser irradiation period, a simpler and more compact structure can be achieved since only one weld is provided.

The above working examples describe a sheet-shaped filter element 14, but the present invention is not limited by this. A corrugated filter element supported by a support frame made of synthetic resin is also possible.

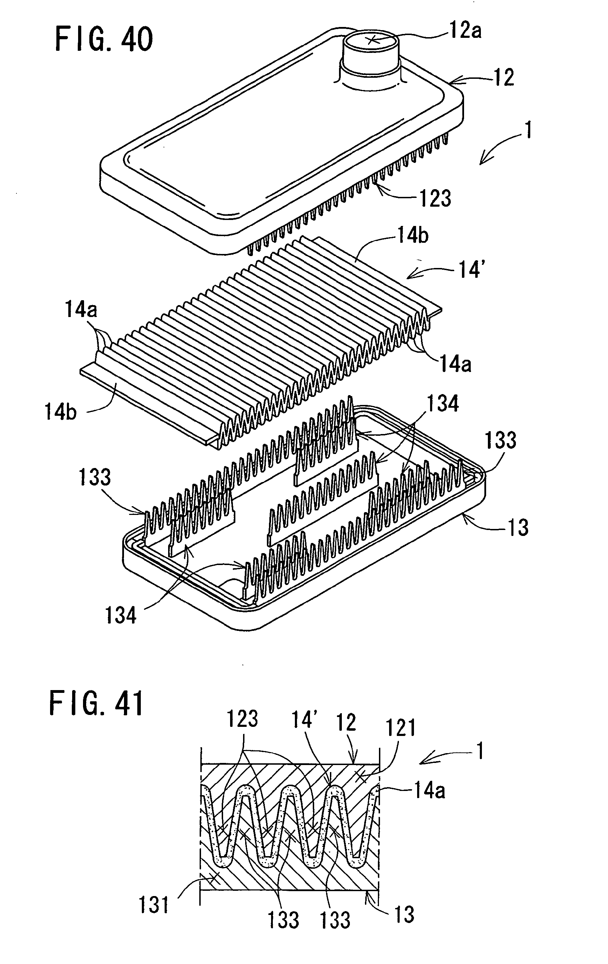

Furthermore, a filter 1 with a corrugated filter element 14' is also conceivable. More specifically, in the filter 1 as shown in FIGS. 40 and 41, comb-teeth-shaped portions 123 and 133 are formed on the joining ends 121 and 131 of the case members 12 and 13. With the case members 12 and 13 pressed, a corrugated portion 14a of the filter element 14' is held between the comb-teeth-shaped portions 123 and 133 of the case members 12 and 13. In this state, laser light L1 is laterally radiated toward the outer side surface of the filter element 14' and the comb-teeth-shaped portions 123 and 133 to form the element weld W1, which welds the three members 12, 13 and 14'.

In this manner, laser light L1 is radiated from the side of the filter 1 so as to weld the corrugated filter element 14' to the lower case member 13. Therefore, compared to radiating laser light from the pressing direction (the joining direction P) of the case members 12 and 13 as in the past, laser light can be radiated orthogonal to the absorbent side of the welded member (the lower case member 13) to achieve a reliable welding of the welded member. Furthermore, radiating laser light with a predetermined radiation width relieves the need for aligning the focal distance of the laser light to the weld region along the corrugated portion 14a, thus making a more reliable weld possible.

It should be noted that with the filter 1, provided in the inner side area of joining ends 121 and 131 of the case members 12 and 13 are a plurality of supporting comb-teeth-shaped portions that are used for supporting the corrugated portion 14a of the filter element 14' (only a supporting comb-teeth-shaped portion 134 of the lower case member 13 is shown in FIG. 40). In addition, a sheet-shaped portion 14b of the filter element 14' is held between the joining ends 121 and 131 of the case members 12 and 13, similar to the above working example.

According to the above working example, the position of the outer side surface of the outer wall 124 of the upper case member 12 and the position of the outer side surface of the joining end 131 of the lower case member 13 substantially coincide. However, the present invention is not limited by this, and for example, the position of the outer side surface of the outer wall 124 of the upper case member 12 may coincide with the position of the outer side surface of the engaging portion 122.

In addition, according to the above working example, the outer wall 124 is only provided on the upper case member 12. However, the present invention is not limited by this, and for example, an outer wall may be provided only on the lower case member 13, or an outer wall may be provided on both the case members 12 and 13.

The present invention is used as a filter that filtrates contaminated fluid, and more specifically, the filter is more suitably used as an oil filter for an automatic transmission of a vehicle.

Also note that the structural elements used in the filter according to the first embodiment and the manufacturing method therefor, and the structural elements used in the filter according to the second embodiment and the manufacturing method therefor can be used in combination as appropriate.

A filter has a first case member and a second case member that are mutually joined to form a filter chamber, and a filter element that is held between respective joining ends of the first case member and the second case member. The first case member has laser permeability, and the second case member has laser absorbency. An element weld is formed by laser light on a contact area between the joining end of the second case member and the filter element.

## Claims

1. A filter comprising:
a first case member (12) and a second case member (13) that are mutually joined to form a filter chamber (S); and
a filter element (14; 14') that is held between respective joining ends (121; 131) of said first case member (12) and said second case member (13), wherein
said second case member (13) has laser absorbency, and
a weld (W1) is formed by laser light (L1) at a contact area between said filter element (14; 14') and said joining end (131) of said second case member (13) to connect said filter element (14; 14') and said second case member (13),
**characterized in that**
said weld (W1) is provided at an outer surface area of the contact area, which is arranged radially outside of said filter chamber (S), between said filter element (14; 14') and said joining end (131) of said second case member (13) such that said weld (W1) is disposed away from said chamber (S).

2. The filter according to claim 1, wherein said first case member (12) has laser permeability, and said first case member (12) has an outer wall (124) that extends along a joining direction (P) and is in contact with said joining end (131) of said second case member (13).

3. The filter according to claim 2, wherein a case weld (W2) is formed by laser light (L2) at a contact area between said outer wall (124) and said joining end (131) of said second case member (13).

4. The filter according to claim 3, wherein said outer wall (124) faces an outer surface area of a tip of said joining end (131) on said second case member (13) from a predetermined distance.

5. The filter according to claim 3, wherein the outer wall (124) is in contact with an outer surface area of a tip of said joining end (131) on said second case member (13).

6. The filter according to claim 2, wherein said outer wall (124) is in contact with an outer surface area of a tip of said joining end (131) on said second case member (13), and said weld (W1) is formed extending up to said outer wall (124).

7. The filter according to any one of claims 2 to 6, wherein said outer wall (124) is in contact with said joining end (131) of said second case member (13) at a contact surface that extends along the joining direction (P).

8. The filter according to any one of claims 2 to 7, wherein said first case member (12) has an engaging portion (122; 122a; 122b), and said second case member (13) has an engaged portion (132; 132a; 132b) that engages with said engaging portion (122; 122a; 122b) in the joining direction (P).

9. The filter according to claim 8, wherein said engaging portion (122; 122a; 122b) and said engaged portion (132; 132a; 132b) are provided on at least one of a filter chamber (S) side and a side opposite the filter chamber (S) side of a weld (W1; W2) formed at said contact area between said outer wall (124) and said joining end (131) of said second case member (13).

10. The filter according to any one of claims 1 to 9, wherein comb-teeth-shaped portions (123; 133) for supporting said filter element (14; 14') with a corrugated shape are provided on said respective joining ends (121; 131) of said first case member (12) and said second case member (13).

11. The filter according to any one of claims 1 to 10, wherein
a notch (135) is provided on a surface area of at least one of said first case member (12) and said second case member (13), which is in contact with an outer end of said filter element (14; 14'),
a portion of said outer end of said filter element (14; 14') is disposed within a space of said notch (135), and
at least a portion of said outer end of said filter element (14; 14') structures said weld (W1).

12. The filter according to claim 11, wherein a joining-direction (P) thickness (t3) of said weld (W1) is greater than a joining-direction (P) thickness (t1) of a supported portion (141a) of said filter element (14; 14') supported between said first case member (12) and said second case member (13).

13. The filter according to claim 11 or 12, wherein said notch (135) is provided on a tip outer corner area of said joining end (131) of said second case member (13).

14. The filter according to claim 13, wherein an outer surface area of said joining end (131) of said second case member (13) and an outer surface area of said outer end of said filter element (14; 14') are substantially on the same plane.

15. The filter according to any one of claims 11 to 14, wherein said filter element (14; 14') has laser absorbency.

16. A manufacturing method for the filter according to any one of claims 1 to 15, comprising:
mutually joining a first case member (12) and a second case member (13) which has laser absorbency, to form a filter chamber (S) with a rim of a filter element (14; 14') in contact with the joining end (131) of said second case member (13) so as to hold said filter element (14; 14') between said joining ends (121; 131) of said first case member (12) and said second case member (13); and
radiating laser light (L1) toward at least one of said joining end (131) of said second case member (13) and an outer end of said filter element (14; 14') with said filter element (14; 14') in a held state such that a weld (W1) connecting said filter element (14; 14') and said second case member (13) is provided at an outer surface area of the contact area, which is arranged radially outside of said filter chamber (S), between said filter element (14; 14') and said joining end (131) of said second case member (13) such that said weld (W1) is disposed away from said chamber (S).

17. The manufacturing method for a filter according to claim 16, wherein holding of said filter element (14; 14') involves holding said filter element (14; 14') between said joining ends (121; 131) of said first case member (12) and said second case member (13) with a portion of said outer end of said filter element (14; 14') disposed within a space of a notch (135) provided on at least one of said first case member (12) and said second case member (13).

## Patentansprüche

1. Filter mit
einem ersten Gehäusebauteil (12) und einem zweiten Gehäusebauteil (13), die wechselseitig verbunden sind, um eine Filterkammer (S) auszubilden; und
einem Filterelement (14; 14'), das zwischen jeweiligen Verbindungsenden (121; 131) des ersten Gehäusebauteils (12) und des zweiten Gehäusebauteils (13) gehalten ist, wobei
das zweite Gehäusebauteil (13) eine Laseraufnahmefähigkeit besitzt, und
eine Schweißnaht (W1) durch ein Laserlicht (L1) an einem Berührungsbereich zwischen dem Filterelement (14; 14') und dem Verbindungsende (131) des zweiten Gehäusebauteils (13) ausgebildet ist, um das Filterelement (14; 14') und das zweite Gehäusebauteil (13) zu verbinden,
**dadurch gekennzeichnet, dass**
die Schweißnaht (W1) an einem äußeren Flächenbereich des Berührungsbereichs, der radial außerhalb der Filterkammer (S) angeordnet ist, zwischen dem Filterelement (14; 14') und dem Verbindungsende (131) des zweiten Gehäusebauteils (13) derart vorgesehen ist, dass die Schweißnaht (W1) entfernt von der Kammer (S) angeordnet ist.

2. Filter nach Anspruch 1, wobei das erste Gehäusebauteil (12) eine Laserdurchlässigkeit besitzt und das erste Gehäusebauteil (12) eine äußere Wand (124) hat, die sich entlang einer Verbindungsrichtung (P) erstreckt und in Berührung mit dem Verbindungsende (131) des zweiten Gehäusebauteils (13) ist.

3. Filter nach Anspruch 2, wobei eine Gehäuseschweißnaht (W2) durch ein Laserlicht (L2) an einem Berührungsbereich zwischen der äußeren Wand (124) und dem Verbindungsende (131) des zweiten Gehäusebauteils (13) ausgebildet ist.

4. Filter nach Anspruch 3, wobei die äußere Wand (124) zu einem äußeren Flächenbereich eines Endes des Verbindungsendes (131) an dem zweiten Gehäusebauteil (13) in einem vorbestimmten Abstand zugewandt ist.

5. Filter nach Anspruch 3, wobei die äußere Wand (124) mit einem äußeren Flächenbereich eines Endes des Verbindungsendes (131) an dem zweiten Gehäusebauteil (13) in Berührung ist.

6. Filter nach Anspruch 2, wobei die äußere Wand (124) mit einem äußeren Flächenbereich eines Endes des Verbindungsendes (131) an dem zweiten Gehäusebauteil (13) in Berührung ist und die Schweißnaht (W1) ausgebildet ist, dass sie sich bis zu der äußeren Wand (124) hin erstreckt.

7. Filter nach einem der Ansprüche 2 bis 6, wobei die äußere Wand (124) mit dem Verbindungsende (131) des zweiten Gehäusebauteils (13) an einer Berührungsfläche in Berührung ist, die sich entlang der Verbindungsrichtung (P) erstreckt.

8. Filter nach einem der Ansprüche 2 bis 7, wobei das erste Gehäusebauteil (12) einen eingreifenden Abschnitt (122; 122a; 122b) hat, und das zweite Gehäusebauteil (13) einen Eingriffsabschnitt (132; 132a; 132b) hat, der mit dem eingreifenden Abschnitt (122; 122a; 122b) in der Verbindungsrichtung (P) eingreift.

9. Filter nach Anspruch 8, wobei der einzugreifende Abschnitt (122; 122a; 122b) und der Eingriffsabschnitt (132; 132a; 132b) an zumindest einer von einer Filterkammerseite (S) und einer Seite einer Schweißnaht (W1; W2) gegenüber der Filterkammerseite (S) vorgesehen ist, die an dem Berührungsbereich zwischen der äußeren Wand (124) und dem Verbindungsende (131) des zweiten Gehäusebauteils (13) ausgebildet ist.

10. Filter nach einem der Ansprüche 1 bis 9, wobei kammzähnenförmige Abschnitte (123; 133) zum Stützen des Filterelements (14; 14') mit einer gerippten Form an den jeweiligen Verbindungsenden (121; 131) des ersten Gehäusebauteils (12) und des zweiten Gehäusebauteils (13) vorgesehen sind.

11. Filter nach einem der Ansprüche 1 bis 10, wobei
eine Nut (135) an einem Flächenbereich von zumindest einem von dem ersten Gehäusebauteil (12) und dem zweiten Gehäusebauteil (13) vorgesehen ist, der mit einem äußeren Ende des Filterelements (14; 14') in Berührung ist,
ein Abschnitt des äußeren Endes des Filterelements (14; 14') innerhalb eines Raums der Nut (135) angeordnet ist, und
zumindest ein Abschnitt des äußeren Endes des Filterelements (14; 14') die Schweißnaht (W1) strukturiert.

12. Filter nach Anspruch 11, wobei eine Dicke (t3) der Schweißnaht (W1) in einer Verbindungsrichtung (P) größer als eine Dicke (t1) eines gestützten Abschnitts (141a) des Filterelements (14; 14'), der zwischen dem ersten Gehäusebauteil (12) und dem zweiten Gehäusebauteil (13) gestützt ist, in einer Verbindungsrichtung (P) ist.

13. Filter nach Anspruch 11 oder 12, wobei die Nut (135) an einem äußeren Endeckenbereich des Verbindungsendes (131) des zweiten Gehäusebauteils (13) vorgesehen ist.

14. Filter nach Anspruch 13, wobei ein äußerer Flächenbereich des Verbindungsendes (131) des zweiten Gehäusebauteils (13) und ein äußerer Flächenbereich des äußeren Endes des Filterelements (14; 14') im Wesentlichen in der gleichen Ebene sind.

15. Filter nach einem der Ansprüche 11 bis 14, wobei das Filterelement (14; 14') eine Laseraufnahmefähigkeit besitzt.

16. Herstellungsverfahren für den Filter nach einem der Ansprüche 1 bis 15, wobei das Verfahren die folgenden Schritte aufweist:
wechselseitiges Verbinden eines ersten Gehäusebauteils (12) und eines zweiten Gehäusebauteils (13), das eine Laseraufnahmefähigkeit besitzt, um eine Filterkammer (S) auszubilden, wobei ein Rand eines Filterelements (14; 14') in Berührung mit dem Verbindungsende (131) des zweiten Gehäusebauteils (13) ist, um das Filterelement (14; 14') zwischen den Verbindungsenden (121; 131) des ersten Gehäusebauteils (12) und des zweiten Gehäusebauteils (13) zu halten; und
Ausstrahlen von Laserlicht (L1) in Richtung von zumindest einem von dem Verbindungsende (131) des zweiten Gehäusebauteils (13) und einem äußeren Ende des Filterelements (14; 14'), wobei das Filterelement (14; 14') in einem gehaltenen Zustand ist, so dass eine Schweißnaht (W1), die das Filterelement (14; 14') und das zweite Gehäusebauteil (13) verbindet, an einem äußeren Flächenbereich des Berührungsbereichs, der radial außerhalb der Filterkammer (S) angeordnet ist, zwischen dem Filterelement (14; 14') und dem Verbindungsende (131) des zweiten Gehäusebauteils (13) derart vorgesehen wird, dass die Schweißnaht (W1) entfernt von der Kammer (S) angeordnet ist.

17. Herstellungsverfahren für einen Filter nach Anspruch 16, wobei ein Halten des Filterelements (14; 14') ein Halten des Filterelements (14; 14') zwischen den Verbindungsenden (121; 131) des ersten Gehäusebauteils (12) und des zweiten Gehäusebauteils (13) umfasst, wobei ein Abschnitt des äußeren Endes des Filterelements (14; 14') innerhalb eines Raums einer Nut (135) angeordnet ist, die an zumindest einem von dem ersten Gehäusebauteil (12) und dem zweiten Gehäusebauteil (13) vorgesehen ist.

## Revendications

1. Filtre comprenant :
un premier élément de boîtier (12) et un deuxième élément de boîtier (13) qui sont mutuellement reliés pour former une chambre de filtrage (S) ; et
un élément de filtre (14 ; 14') qui est maintenu entre les extrémités d'assemblage respectives (121 ; 131) dudit premier élément de boîtier (12) et dudit deuxième élément de boîtier (13), dans lequel
ledit deuxième élément de boîtier (13) présente une absorptivité au laser, et
une soudure (W1) est formée par une lumière laser (L1) au niveau d'une zone de contact entre ledit élément de filtre (14 ; 14') et ladite extrémité d'assemblage (131) dudit deuxième élément de boîtier (13) pour connecter ledit élément de filtre (14 ; 14') et ledit deuxième élément de boîtier (13),
**caractérisé en ce que**
ladite soudure (W1) est prévue au niveau d'une zone de surface externe de la zone de contact, qui est prévue radialement à l'extérieur de ladite chambre de filtrage (S), entre ledit élément de filtre (14 ; 14') et ladite extrémité d'assemblage (131) dudit deuxième élément de boîtier (13) d'une manière telle que ladite soudure (W1) est disposée éloignée de ladite chambre (S).

2. Filtre selon la revendication 1, dans lequel ledit premier élément de boîtier (12) présente une perméabilité au laser, et ledit premier élément de boîtier (12) comporte une paroi externe (124) qui s'étend le long d'un sens d'assemblage (P) et qui est en contact avec ladite extrémité d'assemblage (131) dudit deuxième élément de boîtier (13).

3. Filtre selon la revendication 2, dans lequel une soudure de boîtier (W2) est formée par une lumière laser (L2) au niveau d'une zone de contact entre ladite paroi externe (124) et ladite extrémité d'assemblage (131) dudit deuxième élément de boîtier (13).

4. Filtre selon la revendication 3, dans lequel ladite paroi externe (124) est en regard d'une zone de surface externe d'une pointe de ladite extrémité d'assemblage (131) sur ledit deuxième élément de boîtier (13) d'une distance prédéterminée.

5. Filtre selon la revendication 3, dans lequel la paroi externe (124) est en contact avec une zone de surface externe d'une pointe de ladite extrémité d'assemblage (131) sur ledit deuxième élément de boîtier (13).

6. Filtre selon la revendication 2, dans lequel ladite paroi externe (124) est en contact avec une zone de surface externe d'une pointe de ladite extrémité d'assemblage (131) sur ledit deuxième élément de boîtier (13), et ladite soudure (W1) est formée en s'étendant jusqu'à ladite paroi externe (124).

7. Filtre selon l'une quelconque des revendications 2 à 6, dans lequel ladite paroi externe (124) est en contact avec ladite extrémité d'assemblage (131) dudit deuxième élément de boîtier (13) au niveau d'une surface de contact qui s'étend selon le sens d'assemblage (P).

8. Filtre selon l'une quelconque des revendications 2 à 7, dans lequel ledit premier élément de boîtier (12) comporte une partie d'accouplement (122 ; 122a ; 122b), et ledit deuxième élément de boîtier (13) comporte une partie accouplée (132 ; 132a ; 132b) qui s'accouple avec ladite partie d'accouplement (122 ; 122a ; 122b) dans le sens d'assemblage (P) .

9. Filtre selon la revendication 8, dans lequel ladite partie d'accouplement (122 ; 122a ; 122b) et ladite partie accouplée (132 ; 132a ; 132b) sont prévues sur au moins un côté d'une chambre de filtrage (S) et un côté opposé au côté de la chambre de filtrage (S) d'une soudure (W1 ; W2) formée au niveau de ladite zone de contact entre ladite paroi externe (124) et ladite extrémité d'assemblage (131) dudit deuxième élément de boîtier (13).

10. Filtre selon l'une quelconque des revendications 1 à 9, dans lequel des parties en forme de dents de peigne (123 ; 133) destinées à supporter ledit élément de filtre (14 ; 14') avec une forme cannelée sont prévues sur lesdites extrémités d'assemblage respectives (121 ; 131) dudit premier élément de boîtier (12) et dudit deuxième élément de boîtier (13).

11. Filtre selon l'une quelconque des revendications 1 à 10, dans lequel
une encoche (135) est prévue sur une zone de surface d'au moins l'un parmi ledit premier élément de boîtier (12) et ledit deuxième élément de boîtier (1613), qui est en contact avec une extrémité extérieure dudit élément de filtre (14 ; 14'),
une partie de ladite extrémité externe dudit élément de filtre (14 ; 14') est disposée à l'intérieur d'un espace de ladite encoche (135), et
au moins une partie de ladite extrémité externe dudit élément de filtre (14 ; 14') structure ladite soudure (W1).

12. Filtre selon la revendication 11, dans lequel l'épaisseur (t3) du sens d'assemblage (P) de ladite soudure (W1) est supérieure à une épaisseur (t1) du sens d'assemblage (P) d'une partie supportée (141a) dudit élément de filtre (14 ; 14') supportée entre ledit premier élément de boîtier (12) et ledit deuxième élément de boîtier (13).

13. Filtre selon la revendication 11 ou 12, dans lequel ladite encoche (135) est prévue sur une zone de coin externe en pointe de ladite extrémité d'assemblage (131) dudit deuxième élément de boîtier (13).

14. Filtre selon la revendication 13, dans lequel une zone de surface externe de ladite extrémité d'assemblage (131) dudit deuxième élément de boîtier (13) et une zone de surface externe de ladite extrémité externe dudit élément de filtre (14 ; 14') sont sensiblement sur le même plan.

15. Filtre selon l'une quelconque des revendications 11 à 14, dans lequel ledit élément de filtre (14 ; 14') présente une absorptivité au laser.

16. Procédé de fabrication du filtre selon l'une quelconque des revendications 1 à 15, comprenant les étapes consistant à :
assembler mutuellement un premier élément de boîtier (12) et un deuxième élément de boîtier (13) qui présente une absorptivité au laser, pour former une chambre de filtrage (S) avec un bord d'un élément de filtre (14 ; 14') en contact avec l'extrémité d'assemblage (131) dudit deuxième élément de boîtier (13) de façon à maintenir ledit élément de filtre (14 ; 14') entre lesdites extrémités d'assemblage (121 ; 131) dudit premier élément de boîtier (12) et dudit deuxième élément de boîtier (13) ; et
irradier une lumière laser (L1) vers au moins l'une parmi ladite extrémité d'assemblage (131) dudit deuxième élément de boîtier (13) et une extrémité externe dudit élément de filtre (14 ; 14') avec ledit élément de filtre (14,14') dans un état maintenu d'une manière telle qu'une soudure (W1) connectant ledit élément de filtre (14 ; 14') et ledit deuxième élément de boîtier (13) est prévue au niveau d'une zone de surface externe de la zone de contact, qui est prévue radialement à l'extérieur de ladite chambre de filtrage (S), entre ledit élément de filtre (14 ; 14') et ladite extrémité d'assemblage (131) dudit deuxième élément de boîtier (13) d'une manière telle que ladite soudure (W1) est disposée éloignée de ladite chambre (S).

17. Procédé de fabrication pour un filtre selon la revendication 16, dans lequel le maintien dudit élément de filtre (14 ; 14') implique le maintien dudit élément de filtre (14 ; 14') entre lesdites extrémités d'assemblage (121 ; 131) dudit premier élément de boîtier (12) et dudit deuxième élément de boîtier (13) avec une partie de ladite extrémité externe dudit élément de filtre (14 ; 14') disposée à l'intérieur d'un espace d'une encoche (135) prévue sur au moins l'un parmi ledit premier élément de boîtier (12) et ledit deuxième élément de boîtier (13).
